# EUROPEAN PATENT APPLICATION

(11) **EP 4 561 031 A1**
(43) Date of publication of application: **28.05.2025**
(21) Application number: 23865715.9
(22) Date of filing: 27.07.2023
(51) Int. Cl.: H04M 1/02, G06F 1/16, H10K 50/86, H10K 50/844, H10K 77/10, G02B 5/20

(54) **ELECTRONIC APPARATUS COMPRISING DISPLAY**

(30) Priority: 14.09.2022 KR 20220115555; 28.10.2022 KR 20220141812
(71) Applicant: Samsung Electronics Co., Ltd., Suwon-si, Gyeonggi-do 16677 (KR)
(72) Inventor: JO, Jeonggyu, Suwon-si, Gyeonggi-do 16677 (KR); SHIN, Hyunho, Suwon-si, Gyeonggi-do 16677 (KR); AN, Jungchul, Suwon-si, Gyeonggi-do 16677 (KR); KIM, Yongyoun, Suwon-si, Gyeonggi-do 16677 (KR)
(74) Representative: HGF
(86) International application number: PCT/KR2023/010972
(87) International publication number: WO 2024/058412

(57) **Abstract**

The present disclosure relates to an electronic device comprising a display. The electronic device according to one embodiment may comprise a hinge module, a first housing and a second housing disposed on both sides about a folding axis, and a display module that is arranged to extend from one surface of the first housing across the hinge module to one surface of the second housing and includes a first metal sheet layer in which a plurality of first fiducial holes and a plurality of slit holes are formed, wherein the hinge module is coupled to the first housing and the second housing and may include a plurality of second fiducial holes.

## Description

### [Technical Field]

The disclosure relates to an electronic device including a driving element.

### [Background Art]

Electronic devices are being enhanced, taking into account not only the design aspect but also the functional aspect. Electronic devices are being made in a variety of shapes, other than the uniform bar-type shape. Further, for display-equipped electronic devices, implementation of a large-screen display is intended within limited device dimensions. To that end, a display provided in an electronic device may be operated in a manner to be folded or unfolded together with the electronic device, and various structure(s) for supporting such folding or unfolding needs to be provided in the electronic device.

### [Detailed Description of the Invention]

An electronic device may have various electronic components mounted therein up to the side edge. As more electronic components are functionally mounted in the side edge, the side edge may further thicken. Since a reduced width of the side edge may lead to enhanced user immersion of the display screen, it is required to mount sufficient electronic components while reducing, or maintaining to the same level, the width of the side edge. Further, a display module and other components constituting the electronic device may include various reference points (e.g., fiducial holes) to be aligned and coupled to each other. To reduce the width of the side edge as described above, the reference points need be formed not to protrude over the average horizontal width and/or vertical width of the display module.

An electronic device according to an embodiment of the disclosure may comprise a hinge module, a first housing and a second housing disposed on two opposite sides of a folding axis, and a display module including a first metal sheet layer disposed to extend from one surface of the first housing through the hinge module to one surface of the second housing and having a plurality of first fiducial holes and a plurality of slit holes. The hinge module may be coupled to the first housing and the second housing and include a plurality of second fiducial holes. **In** an embodiment, the display module and the hinge module may be aligned and coupled to each other with respect to the plurality of first fiducial holes and the plurality of second fiducial holes. **In** an embodiment, a width between the plurality of first fiducial holes may be formed to be smaller than a width of the first metal sheet layer with respect to a folding axis direction so that the first fiducial holes do not protrude outside of the first metal sheet layer.

An electronic device according to an embodiment of the disclosure may comprise a display module disposed on a plurality of housings and a hinge module operatively coupled to the plurality of housings and the display module. In an embodiment, the display module may include a metal sheet layer having a plurality of first fiducial holes and a plurality of slit holes. Further, in an embodiment, the plurality of first fiducial holes may be formed to be covered by a protective layer included in the display module. In an embodiment, the hinge module may include a plurality of second fiducial holes. In an embodiment, the display module and the hinge module may be aligned and coupled to each other with respect to the plurality of first fiducial holes and the plurality of second fiducial holes.

An electronic device according to an embodiment of the disclosure may comprise first and second housings, a display module disposed on the first and second housings, and a hinge module operatively coupled to the first and second housings and the display module. According to an embodiment, the display module may include a metal sheet layer having a plurality of first fiducial holes. The plurality of first fiducial holes may be formed not to protrude outside of a protective layer provided in the display module. In an embodiment, the hinge module may include a plurality of second fiducial holes. The display module and the hinge module may be aligned and coupled to each other with respect to the plurality of first fiducial holes and the plurality of second fiducial holes.

According to an embodiment of the disclosure, it is possible to reduce the gap between the display module and the housing surrounding the display module, i.e., the width of the side edge. More specifically, a gap between the display module and the housing, which may be caused when the fiducial hole may protrude outside of the display module, may be removed.

Effects achievable in example embodiments of the disclosure are not limited to the above-mentioned effects, but other effects not mentioned may be apparently derived and understood by one of ordinary skill in the art to which example embodiments of the disclosure pertain, from the following description. In other words, unintended effects in practicing embodiments of the disclosure may also be derived by one of ordinary skill in the art from example embodiments of the disclosure.

### [Brief Description of the Drawings]

FIG. 1 is a block diagram illustrating an electronic device in a network environment according to an embodiment of the disclosure.
FIG. 2A is a perspective view illustrating an electronic device in a flat state or unfolded state according to an embodiment.
FIG. 2B is a plan view illustrating a front surface of an electronic device in an unfolded state according to an embodiment.
FIG. 2C is a plan view illustrating a rear surface of an electronic device in an unfolded state according to an embodiment.
FIG. 3A is a perspective view illustrating an electronic device in a folded state according to an embodiment.
FIG. 3B is a perspective view illustrating an electronic device in an intermediate state according to an embodiment.
FIG. 4 is an exploded perspective view illustrating an electronic device according to an embodiment.
FIG. 5 is an exploded perspective view illustrating a display according to an embodiment.
FIG. 6 is a view schematically illustrating a first metal sheet layer according to an embodiment.
FIG. 7 is a view schematically illustrating a state in which first and second metal sheet layers are stacked according to an embodiment.
FIG. 8A is a cross-sectional view taken along I-I' of an electronic device according to an embodiment.
FIG. 8B is a cross-sectional view taken along I-II' of an electronic device according to an embodiment.
FIG. 9A is a cross-sectional view taken along I-I' of an electronic device according to an embodiment.
FIG. 9B is a cross-sectional view taken along I-II' of an electronic device according to an embodiment.
FIG. 10 is a view schematically illustrating a state in which first and second metal sheet layers are stacked according to an embodiment.
FIG. 11A is a cross-sectional view taken along III-III' of FIG. 10 in an electronic device according to an embodiment.
FIG. 11B is a cross-sectional view taken along IV-IV' of an electronic device according to an embodiment.
FIG. 11C is a cross-sectional view taken along V-V' of an electronic device according to an embodiment.
FIG. 12 is a view schematically illustrating a first metal sheet layer according to an embodiment.
FIG. 13 is a view schematically illustrating a state in which first and second metal sheet layers are stacked according to an embodiment.
FIG. 14A is a cross-sectional view taken along VI-VI' of FIG. 13 in an electronic device according to an embodiment.
FIG. 14B is a cross-sectional view taken along VII-VII' of an electronic device according to an embodiment.
FIG. 15A is a cross-sectional view taken along VI-VI' of FIG. 13 in an electronic device according to an embodiment.
FIG. 15B is a cross-sectional view taken along VII-VII' of an electronic device according to an embodiment.
FIG. 16 is a view schematically illustrating a state in which first and second metal sheet layers are stacked according to an embodiment.
FIG. 17A is a cross-sectional view taken along VIII-VIII' of FIG. 16 in an electronic device according to an embodiment.
FIG. 17B is a cross-sectional view taken along IX-IX' of an electronic device according to an embodiment.
FIG. 17C is a cross-sectional view taken along X-X' of an electronic device according to an embodiment.
FIG. 18A is a front view illustrating a display module provided in an electronic device according to an embodiment.
FIG. 18B is a rear view illustrating a display module provided in an electronic device according to an embodiment.

Reference may be made to the accompanying drawings in the following description, and specific examples that may be practiced are shown as examples within the drawings. Other examples may be utilized and structural changes may be made without departing from the scope of the various examples.

### [Mode for Carrying out the Invention]

Hereinafter, embodiments of the disclosure are described in detail with reference to the drawings so that those skilled in the art to which the disclosure pertains may easily practice the disclosure. However, the disclosure may be implemented in other various forms and is not limited to the embodiments set forth herein. The same or similar reference denotations may be used to refer to the same or similar elements throughout the specification and the drawings. Further, for clarity and brevity, no description is made of well-known functions and configurations in the drawings and relevant descriptions.

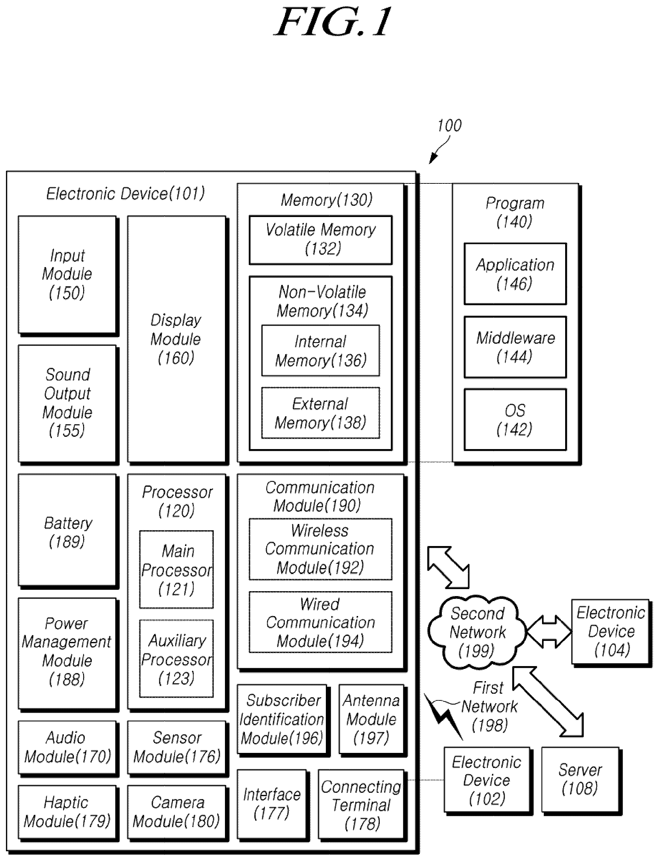

FIG. 1 is a block diagram illustrating an electronic device in a network environment according to an embodiment of the disclosure.

Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display 160 may include, for example, a display, a hologram device, or a projector and control circuitry to control a corresponding one of the display, hologram device, and projector. According to an embodiment, the display 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a communication module 192 (e.g., a cellular communication module, a short-range communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The communication module 192 may identify or authenticate the electronic device 101 in a communication network, such as the first network 198 or the second network 199, using subscriber information (e.g., international mobile subscriber identity (IMSI)) stored in the subscriber identification module 196.

The communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The communication module 192 may support a high-frequency band (e.g., the mmWave band) to achieve, e.g., a high data transmission rate. The communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The communication module 192 may support various requirements specified in the electronic device 101, an external electronic device (e.g., the electronic device 104), or a network system (e.g., the second network 199). According to an embodiment, the communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197. According to various embodiments, the antenna module 197 may form a mmWave antenna module. According to an embodiment, the mm Wave antenna module may include a printed circuit board, a RFIC disposed on a first surface (e.g., the bottom surface) of the printed circuit board, or adjacent to the first surface and capable of supporting a designated high-frequency band (e.g., the mm Wave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, instructions or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or health-care) based on 5G communication technology or IoT-related technology.

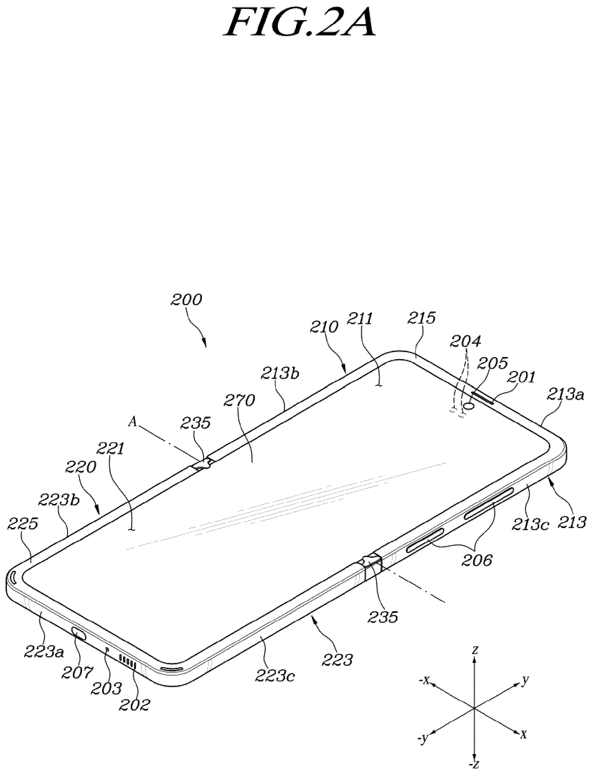

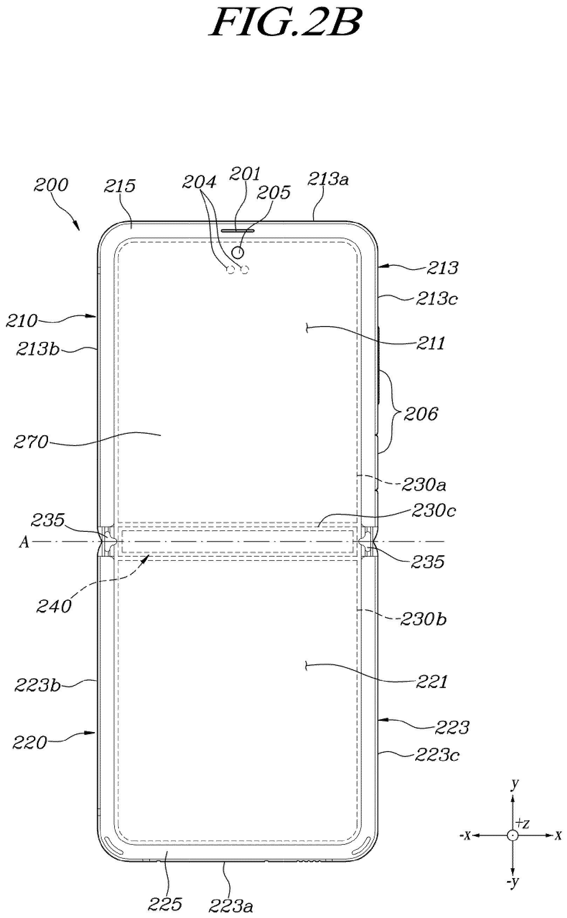

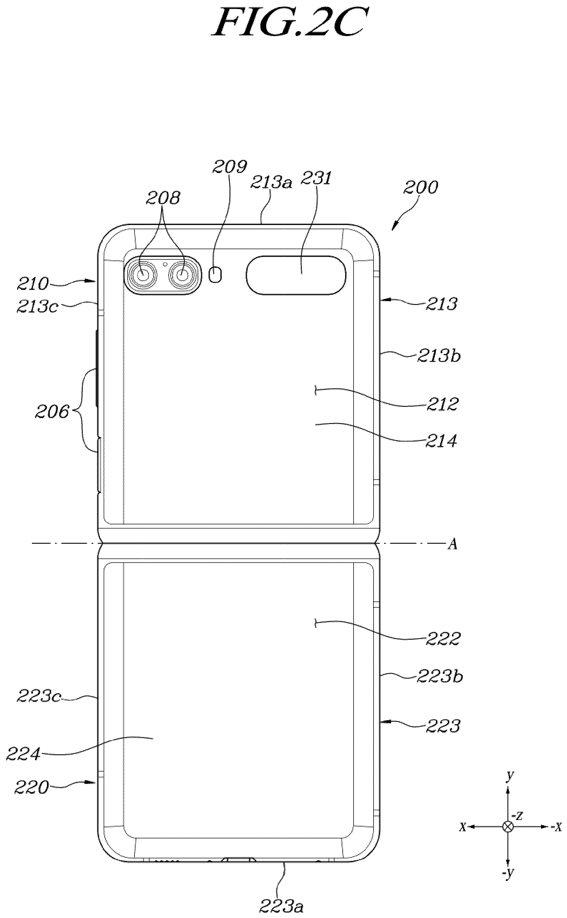

FIG. 2A is a perspective view illustrating an electronic device in a flat state or unfolded state according to an embodiment. FIG. 2B is a plan view illustrating a front surface of an electronic device in an unfolded state according to an embodiment. FIG. 2C is a plan view illustrating a rear surface of an electronic device in an unfolded state according to an embodiment.

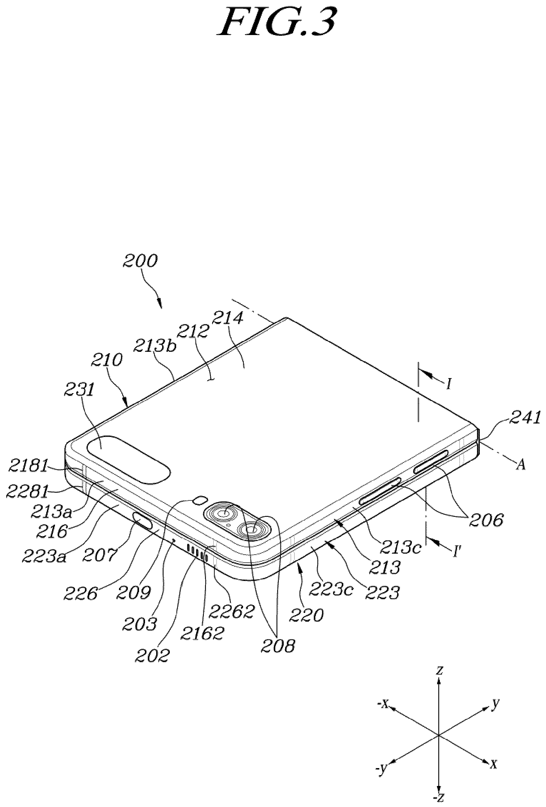

FIG. 3A is a perspective view illustrating an electronic device in a folded state according to an embodiment. FIG. 3B is a perspective view illustrating an electronic device in an intermediate state according to an embodiment.

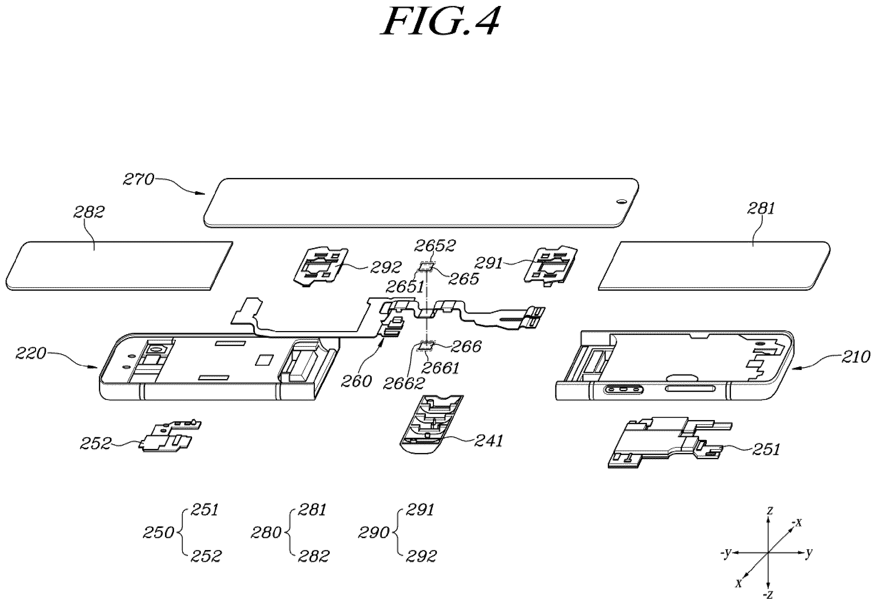

FIG. 4 is an exploded perspective view illustrating an electronic device according to an embodiment.

Referring to FIGS. 2A to 3B, an electronic device 200 may include a pair of housings 210 and 220 (e.g., a foldable housing) rotatably coupled to be folded about a hinge module (e.g., the hinge module 240 of FIG. 4) while facing each other. According to an embodiment, the electronic device 200 may include a flexible display 300 (e.g., the display 160 of FIG. 1 or the display DPM of FIG. 4) disposed in an area formed by the pair of housings 210 and 220. According to an embodiment, the first housing 210 and the second housing 220 may be disposed on two opposite sides of the folding axis (axis F) and be substantially symmetrical in shape with respect to the folding axis (axis F). According to an embodiment, the first housing 210 and the second housing 220 may form different angles or distances depending on whether the foldable electronic device 200 is in an unfolded state (or flat state), a folded state, or an intermediate state.

The pair of housings 210 and 220 may include a first housing 210 (e.g., a first housing structure) coupled to the hinge module (e.g., the hinge module 240 of FIG. 4) and a second housing 220 (e.g., a second housing structure) coupled to the hinge module (e.g., the hinge module 240 of FIG. 4). According to an embodiment, the first housing 210 may include a first surface 211 facing in a first direction (e.g., front direction) (z-axis direction) and a second surface 212 facing in a second direction (e.g., rear direction) (-z-axis direction) opposite to the first surface 211, in the unfolded state.

According to an embodiment, the second housing 220 may include a third surface 221 facing in the first direction (z-axis direction) and a fourth surface 222 facing in the second direction (-z-axis direction), in the unfolded state. According to an embodiment, the electronic device 200 may be operated in such a manner where in the unfolded state, the first surface 211 of the first housing 210 and the third surface 221 of the second housing 220 face in substantially the same first direction (z-axis direction) and, in the folded state, the first surface 211 and the third surface 221 face each other.

According to an embodiment, the foldable electronic device 200 may be operated in such a manner where in the unfolded state, the second surface 212 of the first housing 210 and the fourth surface 222 of the second housing 220 face in substantially the same second direction (-z-axis direction) and, in the folded state, the second surface 212 and the fourth surface 222 face in opposite directions to each other. For example, in the folded state, the second surface 212 may face in the first direction (z-axis direction), and the fourth surface 222 may face in the second direction (-z-axis direction).

According to an embodiment, the first housing 210 may include a first side frame 213 at least partially forming the appearance of the electronic device 200 and a first rear cover 214 coupled with the first side frame 213 and forming at least a portion of the second surface 212 of the electronic device 200. According to an embodiment, the first side frame 213 may include a first surface 213a, a second side surface 213b extending from an end of the first side surface 213a, and a third surface 213c extending from the other end of the first side surface 213a. According to an embodiment, the first side frame 213 may be formed in a rectangular (or square) shape through the first side surface 213a, the second side surface 213b, and the third side surface 213c.

According to an embodiment, the second housing 220 may include a second side frame 223 at least partially forming the appearance of the electronic device 200 and a second rear cover 224 coupled with the second side frame 223 and forming at least a portion of the fourth surface 222 of the electronic device 200. According to an embodiment, the second side frame 223 may include a fourth side surface 223a, a fifth side surface 223b extending from an end of the fourth side surface 223b, and a sixth side surface 223c extending from the other end of the fourth side surface 223a. According to an embodiment, the second side frame 223 may be formed in a rectangular shape through the fourth side surface 223a, the fifth side surface 223b, and the sixth side surface 223c.

According to an embodiment, the pair of housings 210 and 220 is not limited to the shape and coupling shown but may rather be implemented in other shapes or via a combination and/or coupling of other components. For example, in an embodiment, the first side frame 213 may be integrally formed with the first rear cover 214, and the second side frame 223 may be integrally formed with the second rear cover 224.

According to an embodiment, in the unfolded state of the electronic device 200, the second side surface 213b of the first side frame 213 may be connected with the fifth side surface 223b of the second side frame 223 without a gap. According to an embodiment, in the unfolded state of the electronic device 200, the third side surface 213c of the first side frame 213 may be connected with the sixth side surface 223c of the second side frame 223 without a gap. According to an embodiment, in the unfolded state of the electronic device 200, the sum of the lengths of the second side surface 213b and the fifth side surface 223b may be configured to be larger than the length of the first side surface 213a and/or the fourth side surface 223a. Further, the sum of the lengths of the third side surface 213c and the sixth surface 223c may be configured to be larger than the length of the first side surface 213a and/or the fourth side surface 223a.

According to an embodiment, the first side frame 213 and/or the second side frame 223 may be formed of metal or may further include a polymer injected into the metal. According to an embodiment, the first side frame 213 and/or the second side frame 223 may include at least one conductive portion 216 and/or 226 electrically segmented through at least one segmenter 2161, 2162, and/or 2261 or 2262 formed of a polymer. In this case, the at least one conductive portion may be electrically connected with a wireless communication circuit included in the electronic device 200 and be thus used as an antenna operating in at least one designated band (e.g., a legacy band).

According to an embodiment, the first rear cover 214 and/or the second rear cover 224 may be formed of at least one of, or a combination of at least two of, laminated or colored glass, ceramic, polymer, or metal (e.g., aluminum, stainless steel (STS), or magnesium).

According to an embodiment, the flexible display DPM may be disposed from the first surface 211 of the first housing 210 across the hinge module (e.g., the hinge module 240 of FIG. 4) up to at least a portion of the third surface 221 of the second housing 220. For example, the flexible display DPM may include a first flat portion 230a substantially corresponding to the first surface 211, a second flat portion 230b corresponding to the third surface 221, and a bendable portion 230c connecting the first flat portion 230a and the second flat portion 230b and corresponding to the hinge module (e.g., the hinge module 240 of FIG. 4). According to an embodiment, the electronic device 200 may include a first protective cover 215 (e.g., first protective frame or first decoration member) coupled along the edge of the first housing 210. According to an embodiment, the electronic device 200 may include a second protective cover 225 (e.g., second protective frame or second decoration member) coupled along the edge of the second housing 220. According to an embodiment, the first protective cover 215 and/or the second protective cover 225 may be formed of a metal or polymer material. According to an embodiment, the first protective cover 215 and/or the second protective cover 225 may be used as a decoration member. According to an embodiment, the flexible display DPM may be positioned such that an edge of the first flat portion 230a is interposed between the first housing 210 and the first protective cover 215. According to an embodiment, the flexible display DPM may be positioned such that an edge of the second flat portion 230b is interposed between the second housing 220 and the second protective cover 225. According to an embodiment, the flexible display DPM may be positioned such that the edge of the flexible display DPM corresponding to a protective cap (e.g., the protective cap 235 of FIG. 4) is protected through the protective cap disposed in the area corresponding to the hinge module (e.g., the hinge module 240 of FIG. 4). Accordingly, the edge of the flexible display DPM may be substantially protected from the outside.

According to an embodiment, the electronic device 200 may include a hinge housing 241 (e.g., hinge cover) that supports the hinge module (e.g., the hinge module 240 of FIG. 4) and is disposed to be exposed to the outside in the folded state of the electronic device 200 and, in the unfolded state of the electronic device 200, is drawn in a first space and a second space not to be seen from the outside.

According to an embodiment, the electronic device 200 may include a sub display 231 disposed separately from the flexible display DPM. According to an embodiment, as the sub display 231 is disposed on the second surface 212 of the first housing 210 to be at least partially exposed, the sub display 231 may display status information about the electronic device 200 which replaces the display function of the flexible display DPM, in the folded state. According to an embodiment, the sub display 231 may be disposed to be viewed from the outside through at least a partial area of the first rear cover 214. In an embodiment, the sub display 231 may be disposed on the fourth surface 222 of the second housing 220. In this case, the sub display 231 may be disposed to be visible from the outside through at least a partial area of the second rear cover 224.

According to an embodiment, the electronic device 200 may include at least one of an input device (e.g., a microphone), sound output devices 201 and 202, a sensor module 204, camera devices 205 and 208, a key input device 206, or a connector port 207. In the illustrated embodiment, the input device (e.g., the microphone), sound output devices 201 and 202, the sensor module 204, the camera devices 205 and 208, the key input device 206, or the connector port 207 refer to a hole or shape formed in the first housing 210 or the second housing 220, but may be defined to include a substantial electronic component (e.g., an input device, a sound output device, a sensor module, or a camera device) disposed inside the electronic device 200 and operating through the hole or shape.

According to an embodiment, the input device may include at least one microphone 203 disposed in the second housing 220. In an embodiment, the input device may include a plurality of microphones 203 disposed to detect the direction of the sound. In an embodiment, the plurality of microphones 203 may be disposed at appropriate positions in the first housing 210 and/or the second housing 220. According to an embodiment, the sound output devices 201 and 202 may include speakers. According to an embodiment, the speakers may include a call receiver 201 disposed in the first housing 210 and a speaker 202 disposed in the second housing 220. In an embodiment, the input device, the sound output devices 201 and 202, and the connector port 207 may be disposed in a space provided in the first housing 210 and/or the second housing 220 of the electronic device 200 and may be exposed to an external environment through at least one hole formed in the first housing 210 and/or the second housing 220. According to an embodiment, the at least one connector port 207 may be used to transmit and receive power and/or data to and from an external electronic device. In an embodiment, at least one connector port (e.g., an ear jack hole) may receive a connector (e.g., an ear jack) for transmitting and receiving an audio signal to and from an external electronic device. In an embodiment, the holes formed in the first housing 210 and/or the second housing 220 may be commonly used for the input device and the sound output devices 201 and 202. In an embodiment, the sound output devices 201 and 202 may include speakers (e.g., piezo speakers) that operate without holes formed in the first housing 210 and/or the second housing 220.

According to an embodiment, the sensor module 204 may generate an electrical signal or a data value corresponding to an internal operating state of the electronic device 200 or an external environmental state. The sensor module 204 may detect, e.g., an external environment through the first surface 211 of the first housing 210. In an embodiment, the electronic device 200 may further include at least one sensor module disposed to detect an external environment through the second surface 212 of the first housing 210. According to an embodiment, the sensor module 204 (e.g., an illuminance sensor) may be disposed under the flexible display DPM to detect an external environment through the flexible display DPM. According to an embodiment, the sensor module 204 may include at least one of a gesture sensor, a gyro sensor, an atmospheric pressure sensor, a magnetic sensor, an acceleration sensor, a grip sensor, a color sensor, an infrared (IR) sensor, a biometric sensor, a temperature sensor, a humidity sensor, an illuminance sensor, a proximity sensor, a biometric sensor, an ultrasonic sensor, or an illuminance sensor.

According to an embodiment, the camera devices 205 and 208 may include a first camera device 205 (e.g., a front camera device) disposed on the first surface 211 of the first housing 210 and a second camera device 208 disposed on the second surface 212 of the first housing 210. The electronic device 200 may further include a flash 209 disposed near the second camera device 208. According to an embodiment, the camera devices 205 and 208 may include one or more lenses, an image sensor, and/or an image signal processor. The flash 209 may include, e.g., a light emitting diode or a xenon lamp. According to an embodiment, the camera devices 205 and 208 may be disposed so that two or more lenses (a wide-angle lens, an ultra-wide-angle lens, or a telephoto lens) and image sensors are positioned on one surface (e.g., the first surface 211, the second surface 212, the third surface 221, or the fourth surface 222) of the electronic device 200. In an embodiment, the camera devices 205 and 208 may include lenses for time of flight (TOF) and an image sensor.

According to an embodiment, the key input device 206 (e.g., a key button) may be disposed on the third side surface 213c of the first side frame 213 of the first housing 210. In an embodiment, the key input device 206 may be disposed on at least one of the other side surfaces 213a and 213b of the first housing 210 and/or the side surfaces 223a, 223b, and 223c of the second housing 220. In an embodiment, the electronic device 200 may not include some or all of the key input devices 206, and the key input devices 206 not included may be implemented in other forms, such as a soft key, on the flexible display DPM. In an embodiment, the key input device 206 may be implemented using a pressure sensor included in the flexible display DPM.

According to an embodiment, a camera device 205 of the camera devices 205 and 208 or the sensor module 204 may be disposed to be exposed through the flexible display DPM. For example, the first camera device 205 or the sensor module 204 may be disposed to contact an external environment through an opening (e.g., a through hole) at least partially formed in the flexible display DPM in the internal space of the electronic device 200. In another embodiment, some sensor modules 204 may be disposed to perform their functions without being visually exposed through the flexible display DPM in the internal space of the electronic device 200. For example, in this case, the area of the flexible display DPM facing the sensor module may not need an opening.

Referring to FIG. 3B, the electronic device 200 may be operated to maintain an intermediate state through the hinge module (e.g., the hinge module 240 of FIG. 4). In this case, the electronic device 200 may control the flexible display DPM to display different contents in the display area corresponding to the first surface 211 and the display area corresponding to the third surface 221. According to an embodiment, the electronic device 200 may operate in a substantially unfolded state (e.g., the unfolded state of FIG. 2A) and/or a substantially folded state (e.g., the folded state of FIG. 3A) based on a predetermined inflection angle (e.g., the angle between the first housing 210 and the second housing 220 in the intermediate state) through the hinge module (e.g., the hinge module 240 of FIG. 4). For example, when a pressing force is provided in the unfolding direction (direction B) in the unfolded state at a predetermined inflection angle through the hinge module (e.g., the hinge module 240 of FIG. 4), the electronic device 200 may be operated to transition to the unfolded state (e.g., the unfolded state of FIG. 2A). For example, the electronic device 200 may be operated through the hinge module (e.g., the hinge module 240 of FIG. 4) to transition to a closed state (e.g., the folded state of FIG. 3A) when a pressing force is provided in a folding direction (direction C) in a state in which the electronic device 200 is unfolded at a predetermined inflection angle. In an embodiment, the electronic device 200 may be operated to maintain the unfolded state (not shown) at various angles through the hinge module (e.g., the hinge module 240 of FIG. 4).

Referring to FIG. 4, the electronic device 200 may include a first side frame 213, a second side frame 223, and a hinge module 240 rotatably connecting the first side frame 213 and the second side frame 223. According to an embodiment, the electronic device 200 may include a first support plate 2131 at least partially extending from the first side frame 213 and a second support plate 2231 at least partially extending from the second side frame 223. According to an embodiment, the first support plate 2131 may be integrally formed with the first side frame 213 or may be structurally coupled with the first side frame 213. Similarly, the second support plate 2231 may be integrally formed with the second side frame 223 or may be structurally coupled with the second side frame 223.

According to an embodiment, the electronic device 200 may include the flexible display DPM disposed to be supported by the first support plate 2131 and the second support plate 2231. According to an embodiment, the electronic device 200 may include a first rear cover 214 coupled to the first side frame 213 and providing a first space between it and the first support plate 2131 and a second rear cover 224 coupled to the second side frame 223 and providing a second space between it and the second support plate 2231. In an embodiment, the first side frame 213 and the first rear cover 214 may be integrally formed. In an embodiment, the second side frame 223 and the second rear cover 224 may be integrally formed. According to an embodiment, the electronic device 200 may include a first housing 210 (e.g., the first housing 210 of FIG. 2A) (e.g., a first housing structure) provided through the first side frame 213, the first support plate 2131, and the first rear cover 214. According to an embodiment, the electronic device 200 may include a second housing 220 (e.g., the second housing 220 of FIG. 2A) (e.g., a second housing structure) provided through the second side frame 223, the second support plate 2231, and the second rear cover 224. According to an embodiment, the electronic device 200 may include a sub display 231 disposed to be visible from the outside through at least a partial area of the first rear cover 214.

According to an embodiment, the electronic device 200 may include a first board assembly 261 (e.g., a main printed circuit board), a camera assembly 263, a first battery 271, or a first bracket 251 disposed in a first space between the first side frame 213 and the first rear cover 214. According to an embodiment, the camera assembly 263 may include a plurality of camera devices (e.g., the camera devices 205 and 208 of FIGS. 2A and 3A), and may be electrically connected to the first board assembly 261. According to an embodiment, the first bracket 251 may provide a support structure and enhanced rigidity for supporting the first substrate assembly 261 and/or the camera assembly 263. According to an embodiment, the electronic device 200 may include a second board assembly 262 (e.g., a sub printed circuit board), an antenna 290 (e.g., a coil member), a second battery 272, or a second bracket 252 disposed in a second space between the second side frame 223 and the second rear cover 224. According to an embodiment, the electronic device 200 may include a wiring member 280 (e.g., a first printed circuit board (FPCB)) disposed from the first substrate assembly 261 through the hinge module 240 to a plurality of electronic components (e.g., the second substrate assembly 262, the second battery 272, or the antenna 290) disposed between the second side frame 223 and the second rear cover 224 and providing an electrical connection. According to an embodiment, the antenna 290 may include a near field communication (NFC) antenna, a wireless charging antenna, and/or a magnetic secure transmission (MST) antenna. For example, the antenna 290 may perform short-range communication with an external device or may wirelessly transmit and receive power required for charging.

According to an embodiment, the electronic device 200 may include a hinge housing 241 (e.g., a hinge cover) that supports the hinge module 240, is exposed to the outside when the electronic device 200 is in a folded state (e.g., the folded state of FIG. 3A), and is drawn in a first space and/or a second space not to be visible from the outside when the electronic device 200 is in an unfolded state (e.g., the unfolded state of FIG. 2A).

According to an embodiment, the electronic device 200 may include a first protective cover 215 coupled along an edge of the first side frame 213. According to an embodiment, the electronic device 200 may include a second protective cover 225 coupled along an edge of the second side frame 223. According to an embodiment, an edge of the first flat portion (e.g., the first flat portion 230a of FIG. 2B) of the flexible display DPM may be protected by the first protective cover 215. According to an embodiment, an edge of the second flat portion (e.g., the second flat portion 230a of FIG. 2B) of the flexible display DPM may be protected by the second protective cover 225. According to an embodiment, the electronic device 200 may include a protective cap 235 disposed to protect an edge of a bendable portion (e.g., the bendable portion 230c of FIG. 2B) corresponding to the hinge module 240 of the flexible display DPM.

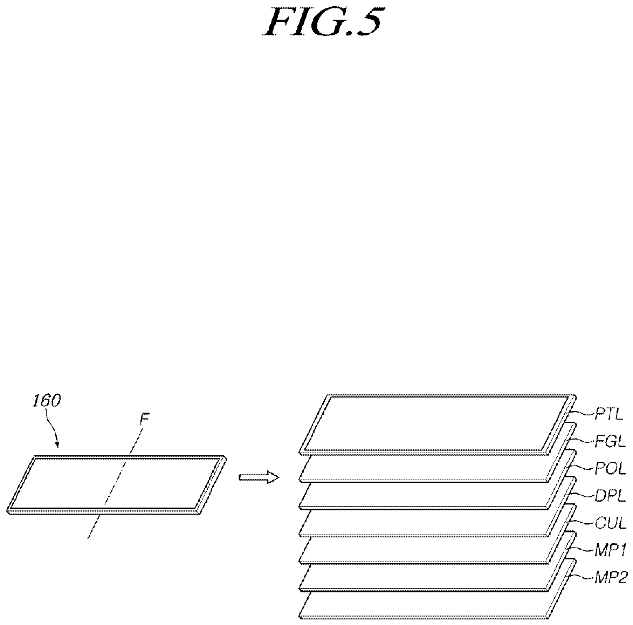

FIG. 5 is an exploded perspective view illustrating a display according to an embodiment.

A display according to exemplary embodiments of the disclosure may include an unbreakable (UB) type OLED display (e.g., a curved display). However, without limitations thereto, the display (DPM) may include a flat type display of an on-cell touch active matrix organic light emitting diode (AMOLED) (OCTA) type.

Referring to FIG. 5, the display DPM (e.g., a flexible display) may include a window layer FGL, a polarizer POL (e.g., a polarizing film), a display panel DPL, a cushion layer CUL, a first metal sheet layer MP1, and a second metal sheet layer MP2 sequentially disposed on the rear surface of the window layer FGL. According to an embodiment, the window layer FGL may include a glass layer. According to an embodiment, the window layer FGL may include ultra-thin glass (UTG). In an embodiment, the window layer FGL may include a polymer. In this case, the window layer FGL may include polyethylene terephthalate (PET) or polyimide (PI).

According to an embodiment, the window layer FGL, the polarizer POL, the display panel DPL, the cushion layer CUL, the first metal sheet layer MP1, and the second metal sheet layer MP2 may be disposed to cross at least a portion of a first surface (e.g., the first surface 211 of FIG. 2A) of the first housing (e.g., the first surface 211 of FIG. 2A) and a third surface (e.g., the third surface 221 of FIG. 2A) of the second housing (e.g., the second housing 220 of FIG. 2A).

According to an embodiment, the window layer FGL, the polarizer POL, the display panel DPL, the cushion layer CUL, the first metal sheet layer MP1, and the second metal sheet layer MP2 may be attached to each other through an adhesive material (or an adhesive). For example, the adhesive material may include at least one of an optical clear adhesive (OCA), a pressure sensitive adhesive (PSA), a heat-reactive adhesive, a general adhesive, or a double-sided tape.

According to an embodiment, the display DPM may include another adhesive member (e.g., a double-sided tape or a waterproof member) at least partially disposed on one surface of the second metal sheet layer MP2. According to an embodiment, the display DPM may be attached to the support plates (e.g., the first support plate 2131 and the second support plate 2231 of FIG. 4) of the electronic device (e.g., the electronic device 200 of FIG. 4) through another adhesive member.

According to an embodiment, the polarizer POL may selectively transmit light generated from a light source of the display panel DPL and vibrating in a predetermined direction. According to an embodiment, the display panel DPL and the polarizer POL may be integrally formed. According to an embodiment, the display DPM may include a touch panel (not shown). Although not shown, the display panel DPL may include a control circuit. According to an embodiment, the control circuit may include a display driver IC (DDI) and/or a touch display driver IC (TDDI) disposed in a chip-on-panel (COP) or chip-on-film (COF) manner.

According to an embodiment, the cushion layer CUL may include a cushioning member (cushion) formed of a polymer to absorb impact from the outside of the electronic device (e.g., the electronic device 200 of FIG. 2A) to prevent damage to the display DPM.

According to an embodiment, the first metal sheet layer MP1 and the second metal sheet layer MP2 may help reinforce rigidity of the electronic device (e.g., the electronic device 200 of FIG. 2A), and be used to shield surrounding noise, and disperse heat emitted from surrounding heat dissipating components.

According to an embodiment, the first metal sheet layer MP1 or the second metal sheet layer MP2 may include at least one of steel use stainless (SUS) (e.g., stainless steel (STS)), Cu, Al, or CLAD (e.g., a stacked member in which SUS and Al are alternately disposed). Further, the first metal sheet layer MP1 or the second metal sheet layer MP2 may include other alloy materials.

According to an embodiment, the first metal sheet layer MP1 or the second metal sheet layer MP2 may be integrally formed as a portion facing the first housing (e.g., the first housing 210 of FIG. 2A) of the electronic device (e.g., the first housing 210 of FIG. 2A) and a portion facing the second housing (e.g., the second housing 220 of FIG. 2A) is connected to a bendable portion formed in a portion facing the hinge module (e.g., the hinge module 240 of FIG. 4).

In an embodiment, in the first and second metal sheet layers MP1 and MP2, the portion facing the first housing (e.g., the first housing 210 of FIG. 2A) and the portion facing the second housing (e.g., the second housing 220 of FIG. 2A), except for the portion facing the hinge module (e.g., the hinge module 240 of FIG. 4), each may be separately formed.

In an embodiment, the flexible display DPM may further include metal reinforcing plates (not shown) disposed under the first metal sheet layer MP1 or the second metal sheet layer MP2 to reinforce rigidity. According to an embodiment, the reinforcing plates may be disposed to face the first housing (e.g., the first housing 210 of FIG. 2A) and the second housing (e.g., the second housing 220 of FIG. 2A).

According to an embodiment, the display DPM may include one or more protective layers PTL sequentially stacked on the window layer FGL. Without limitations thereto, the protective layer PTL may include, or be formed of, polyethylene terephthalate (PET) or polyimide (PI) having excellent optical properties. Further, the protective layer PTL may include, or be formed of, thermoplastic polyurethane (TPU), which is advantageous in terms of elasticity.

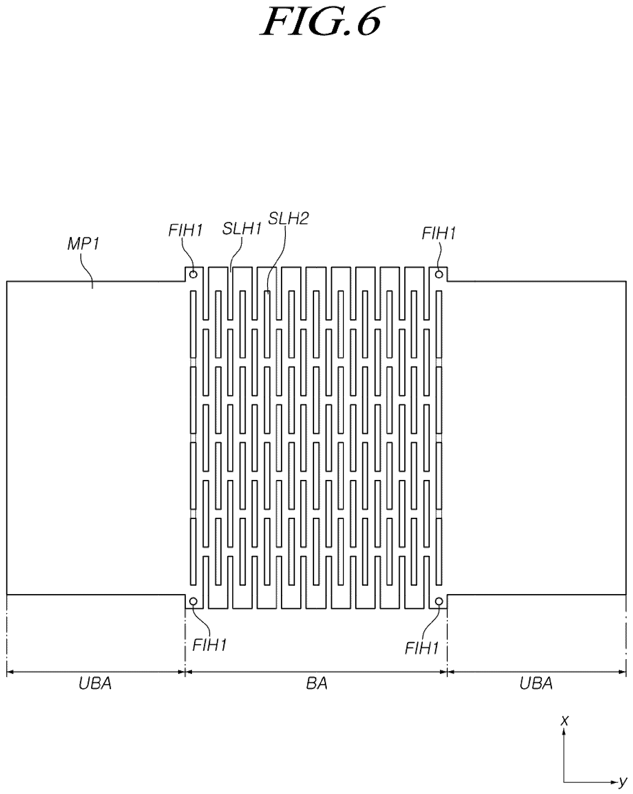

FIG. 6 is a view schematically illustrating a first metal sheet layer according to an embodiment.

In an embodiment, the first metal sheet layer MP1 may be divided into a bending area BA and an unbending area UBA. The first metal sheet layer MP1 may have a bending portion over the bending area BA, and may include an unbending portion (or a flat portion) over the unbending area UBA.

The first metal sheet layer MP1 of the bending area BA may be configured so that the electronic device including the first metal sheet layer MP1 (e.g., the electronic device 200 of FIG. 2A) operates in a folded state, an unfolded state, or an intermediate state. In the bending area BA of the first metal sheet layer MP1, a plurality of slit holes SLH1 and SLH2 may be provided so that the first metal sheet layer MP1 may be bent.

The first metal sheet layer MP1 of the unbending area UBA may be configured to have a flat surface even when the electronic device including the first metal sheet layer MP1 is maintained in the folded state, the unfolded state, or the intermediate state. The slit holes may not be formed in the unbending area UBA of the first metal sheet layer MP1 for high rigidity.

In an embodiment, the first metal sheet layer MP1 may include one or more slit holes SLH1 and SLH2. One or more slit holes SLH1 and SLH2 may be formed over the bending area BA. The one or more slit holes SLH1 and SLH2 may extend in a first direction (e.g., the x-axis direction or the folding axis direction of FIG. 2A).

In an example, the slit holes SLH1 and SLH2 may include a first slit hole SLH1 and a second slit hole SLH2. The first slit hole SLH1 and the second slit hole SLH2 may be formed at different positions with respect to the second direction. In an example, the first and second slit holes SLH1 and SLH2 may be formed in a manner that they are repeatedly aligned along the first direction. The first and second slit holes SLH1 and SLH2 may be formed in a manner that they are alternately aligned along the second direction.

In an example, the dimension of the second slit hole SLH2 may be determined based on the dimension of the first slit hole SLH1. For example, the dimension of the second slit hole SLH2 may increase or decrease in proportion to the dimension of the first slit hole SLH1. Meanwhile, the dimension of the second slit hole SLH2 may be independently determined regardless of the dimension of the first slit hole SLH1.

In an embodiment, the slit holes SLH1 and SLH2 may be formed in an elliptical shape of a long hole along the first direction, but is not limited thereto. In an embodiment, the slit holes SLH1 and SLH2 may be formed in the same or different shapes.

In an embodiment, the slit holes SLH1 and SLH2 may be disposed regularly or at irregular intervals along the first direction and/or the second direction.

In an embodiment, at least some or all of the one or more slit holes SLH1 and SLH2 may alternatively be configured as one slit recess. The slit recess may be formed like a trench formed by a predetermined depth in a vertical direction (e.g., the +z-axis direction or the -z-axis direction in FIG. 2A) of the first metal sheet layer MP1.

In an embodiment, at least some of the slit holes SLH1 and SLH2 may be formed between the first peripheral holes FIH1 described below. More specifically, a plurality of slit holes SLH2 may be formed between at least some, or at least two, of the first peripheral holes FIH1. FIG. 6 illustrates an example where the slit hole SLH2 is formed between the first fiducial holes FIH1, but is not limited thereto. Here, a plurality of slit holes SLH1 and SLH2 positioned between the first fiducial holes FIH1 may be formed to extend in the folding axis direction. Further, the first fiducial holes FIH1 positioned outside the slit holes SLH1 and SLH2 may be positioned on the same extension line as the slit holes SLH1 and SLH2.

In an embodiment, the first metal sheet layer MP1 may include one or more first fiducial holes FIH1. The first fiducial hole FIH1 may be formed in an edge of the bending area BA. The first fiducial hole FIH1 may be formed at four corner positions of the first metal sheet layer MP1 corresponding to the bending area BA.

In an example, the first fiducial hole FIH1 may be formed in a circular shape, but is not limited thereto.

In an example, the first fiducial hole(s) FIH1 may be positioned on the extension line of slit holes (e.g., the second slit hole SLH2) formed in an edge with respect to the second direction of the bending area BA. In the disclosure, the slit hole formed in the edge with respect to the second direction of the bending area BA may be referred to as an edge slit hole.

In an example, the first fiducial hole FIH1 may be formed in the edge of the first metal sheet layer MP1 with respect to the extension line of the edge slit holes (e.g., an imaginary line extending in the length direction of the edge slit holes). For example, an upper first fiducial hole FIH1 and a lower fiducial hole FIH1 may be formed in the first metal sheet layer MP1 with respect to the extension line of the edge slit holes. Since the edge slit holes may be present at each corner of the bending area BA, four first fiducial holes FIH1 may be formed on the bending area BA.

In an embodiment, the first fiducial hole FIH1 may be formed to cover a front direction (e.g., the z-axis direction of FIG. 2A) of the electronic device by the protective layer (e.g., the protective layer PTL of FIG. 5). For example, the first fiducial hole FIH1 may be formed so as not to protrude in an outer direction (e.g., the first direction or the x-axis direction) of the display module DPM. In other words, the width between the first partial holes FIH1 with respect to the first direction (e.g., the x-axis direction) may be formed to be smaller than the width of the bending area with respect to the first direction. As is described below, accordingly, when the display module DPM is viewed from the front, the first fiducial hole FIH1 may be covered by an upper stacked component such as the protective layer PTL and the optical filter layer PRL, and may be hardly identified with the naked eye.

In an embodiment, a step may be formed between the bending area BA and the unbending area UBA of the first metal sheet layer MP1. Here, the width of the step may be formed to be larger than the diameter of the first fiducial hole FIH1, but the disclosure is not limited thereto. Due to the step, the width of the first metal sheet layer MP1 with respect to the first direction may be formed to be smaller in the unbending portion UBA than in the bending portion BA.

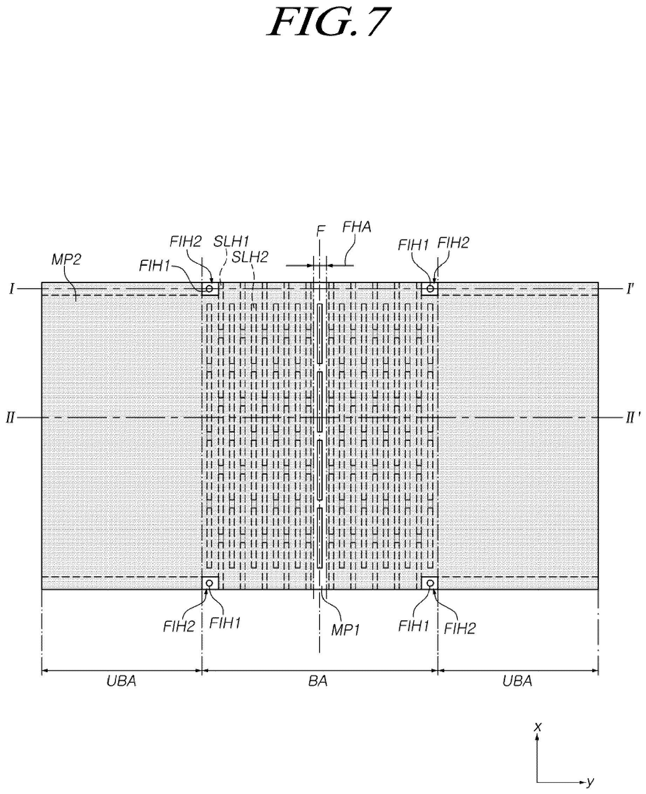

FIG. 7 is a view schematically illustrating a state in which first and second metal sheet layers MP1 and MP2 are stacked according to an embodiment.

In an embodiment, the first metal sheet layer MP1 may be stacked on the second metal sheet layer MP2, as described above with reference to FIG. 5.

In an embodiment, the first metal sheet layer MP1 may be formed to have an area of at least a portion of the second metal sheet layer MP2. In an embodiment, the width of the first metal sheet layer MP1 with respect to the first direction (e.g., the x-axis direction of FIG. 2A) may be formed to be substantially the same as the width of the second metal sheet layer MP2 with respect to the first direction in the unbending area UBA. In an embodiment, the width of the first metal sheet layer MP1 with respect to the first direction may be formed to be substantially the same as the width of the second metal sheet layer MP2 with respect to the first direction in the bending area BA.

In an embodiment, the second metal sheet layer MP2 may include an exposure portion FHA in a central portion. The exposure portion FHA may be formed to extend along the first direction. In an example, the exposure portion FHA may be formed from one edge to the other edge of the second metal sheet layer MP2 along the first direction, but is not limited thereto. For example, the exposure portion FHA is formed along the first direction, and a portion and the other portion of the second metal sheet layer MP2 with the center therebetween may be partially connected to each other.

In an embodiment, the first metal sheet layer MP1 may be partially exposed by the exposure portion FHA provided in the second metal sheet layer MP2. Specifically, at least a portion of the first metal sheet layer MP1 corresponding to the exposure portion FHA of the second metal sheet layer MP2 may be exposed.

In an embodiment, the width of the exposure portion FHA with respect to the second direction may be formed with respect to the width of the slit holes SLH1 and SLH2 formed in the first metal sheet layer MP1. For example, the width of the exposure portion FHA may be formed to be larger than the width of the single slit hole with respect to the second direction (e.g., the y-axis direction of FIG. 2A). Further, with respect to the second direction, the width of the exposure portion FHA may be formed in a dimension to which at least one, at least two, or at least three slit holes SLH1 and SLH2 are exposed, but is not limited thereto.

In an embodiment, the second metal sheet layer MP2 may have a recess in a portion corresponding to the first fiducial hole FIH1. The portion where the recess is formed may be referred to as a cut-out portion FIH2. The second metal sheet layer MP2 may be formed by the cut-out portion FIH2 so as not to cover at least a portion of the first metal sheet layer MP1 corresponding to the first subject hole FIH1. In an embodiment, the cut-out portion FIH2 may be formed in a shape that is concave toward the inside of the second metal sheet layer MP2. For example, the cut-out portion FIH2 may be formed in a U-shape or a square shape with one side omitted, but is not limited thereto. Meanwhile, the width of the second metal sheet layer MP2 may be reduced in an area adjacent to the first fiducial hole FIH1 with respect to the first direction, and the reduced width may be substantially the same as the width of the first metal sheet layer MP1 in the unbending area UBA.

Meanwhile, the first and second metal sheet layers MP1 and MP2 may be provided as a component of the display shown in FIG. 5. In the following disclosure, a cross-section of the electronic device will be exemplarily described with reference to cross-sectional reference lines (e.g., I-I' and II-II') shown in FIG. 7. The cross-sectional reference lines of FIG. 7 are shown for the first and second metal sheet layers MP1 and MP2, but are not limited thereto, and may be used as a reference line for illustrating a cross-section of each layer of the electronic device at that position. The layer structure of the electronic device may be understood with reference to FIGS. 2A to 4 described above, and the layer structure of the display provided in the electronic device may be understood with reference to FIG. 5.

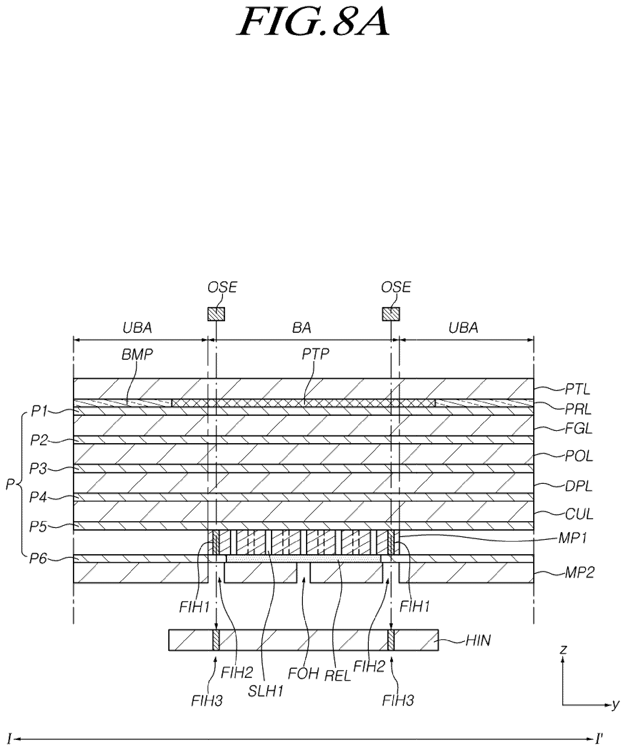

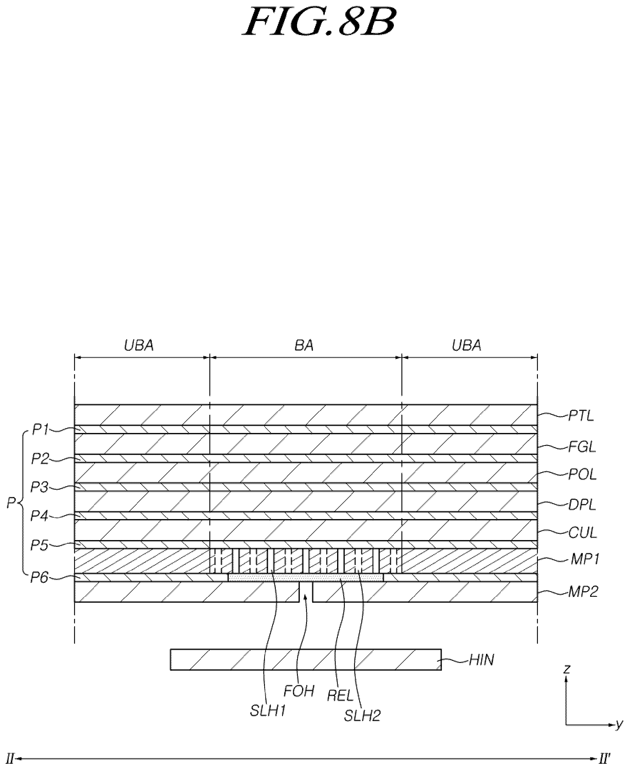

FIG. 8A is a cross-sectional view taken along I-I' of an electronic device according to an embodiment. FIG. 8B is a cross-sectional view taken along II-II' of an electronic device according to an embodiment.

In the disclosure, the cross section viewed from I-I' may mean a second-direction fiducial cross section of the electronic device, and the cross section viewed from II-II' may mean a second-direction inner cross section of the electronic device. The second-direction fiducial cross section means a cross section in the second direction including the first fiducial hole FIH1, and the second-direction inner cross section means a cross section in the second direction not including the first fiducial hole FIH1. The second-direction fiducial cross section may mean, e.g., an edge cross section of the electronic device vertically crossing the folding axis.

More specifically, FIG. 8A is a cross sectional view of the electronic device taken along line I-I' illustrated in FIG. 7. FIG. 8B is a cross sectional view of the electronic device taken along II-II' illustrated in FIG. 7. Here, the cross section relates to the electronic device but do not illustrate all of the components of the electronic device, but is schematically illustrated to describe the structural relationship of various embodiments of the disclosure.

For example, FIG. 8A and FIG. 8B illustrate not only the first and second metal sheet layers MP1 and MP2, but also the protective layer PTL, the window layer FGL, the polarizer POL, the display panel DPL, and the cushion layer CUL, and exemplarily illustrate an optical sensor(s) OSE and a hinge module HIN (e.g., the hinge module 240 of FIG. 4) to illustrate alignment using the first fiducial hole FIH1.

In an embodiment, the electronic device may include a display module (e.g., the display module 160 of FIG. 1, the display DPM of FIG. 4 and FIG. 5). The display module may be disposed to extend from the first surface (e.g., the first surface 211 of FIG. 2A) of the first housing (e.g., the first surface 211 of FIG. 2A) across the hinge module HIN (e.g., the hinge module 240 of FIG. 4) to at least a portion of the third surface (e.g., the third surface 221 of FIG. 2A) of the second housing (e.g., the second housing 220 of FIG. 2A).

In an embodiment, the electronic device may include a hinge housing (e.g., the hinge housing 241 of FIG. 4) that supports the hinge module HIN, is exposed to the outside when the electronic device is in the folded state, and is disposed to be invisible from the outside in the unfolded state.

The display module needs to be coupled with the first and second housings and hinge modules without error. In particular, in the bendable display module DPM, the portion which is bent may have layer components having different structures or shapes and, also in the electronic device, the portion that is bent has a predetermined component such as the hinge module HIN. Thus, the display module DPM needs to be mounted accurately at a determined position in the relationship with other components (e.g., the hinge housing, the hinge module HIN, the first housing, and the second housing). For such accurate mounting, the display module may be provided with a metal sheet layer (e.g., the first metal sheet layer MP1) having the first fiducial hole FIH1 as described above.

In an embodiment, the protective layer PTL, the window layer FGL, the polarizer POL, the display panel DPL, the cushion layer CUL, the first metal sheet layer MP1, and/or the second metal sheet layer MP2 constituting the display module may be bonded by the adhesive material P.

In an embodiment, a plurality of slit holes SLH1 and SLH2 may be formed in the first metal sheet layer MP1. The plurality of slit holes SLH1 and SLH2 may be repeatedly formed along the second direction (e.g., the y-axis direction of FIG. 2A). The plurality of slit holes SLH1 and SLH2 may include first slit holes SLH1 and second slit holes SLH2, and the first slit holes SLH1 and the second slit holes SLH2 may be alternately formed with respect to each other along the second direction.

According to an embodiment, in a cross section in the second direction including the first fiducial hole FIH1, the first metal sheet layer MP1 may include first fiducial holes FIH1 and first slit holes SLH1. According to an embodiment, in a cross section, the first metal sheet layer MP1 is present in a portion corresponding to the bending area BA, but may be deleted in a portion corresponding to the unbending area UBA.

In an embodiment, the first fiducial hole FIH1 may be formed outside the first slit hole SLH1. Specifically, it may be formed at a position adjacent to the first slit hole SLH1 positioned at the outermost side among the plurality of first slit holes SLH1. The first fiducial hole FIH1 may be provided as an opening. The corresponding opening of the first fiducial hole FIH1 may be filled with a permeable material, but the disclosure is not limited thereto.

According to an embodiment, in the second-direction cross section including the first fiducial hole FIH1, the second metal sheet layer MP2 may include a folding hole FOH and cut-out portions FIH2 for exposing the first fiducial hole FIH1. The cut-out portions FIH2 may be formed at positions corresponding to the first fiducial hole FIH1 of the first metal sheet layer MP1. The cut-out portions FIH2 may be formed to have a larger width than the first fiducial hole FIH1. The folding hole FOH may be formed to have a width exposing at least one slit hole. The folding hole FOH may be formed over the exposure portion (e.g., the exposure portion FHA of FIG. 7).

According to an embodiment, the hinge module HIN and/or the hinge housing may be coupled to the display module under the second metal sheet layer MP2. One or more components may be additionally disposed between the second metal sheet layer MP2 and the display module. The following disclosure is described by taking those related to the hinge module HIN as an example but, without limitations thereto, the description of the hinge module HIN as an example may be replaced with that related to the hinge housing.

In an embodiment, the hinge module HIN may be folded or unfolded with respect to the center. The central portion of the hinge module HIN may be formed to correspond to the central portion of the display module. Here, the central portion may be at least a portion that serves as a reference for folding.

In an embodiment, the hinge module HIN may include one or more second fiducial holes FIH3. The second fiducial hole FIH3 may be formed at a position corresponding to the first fiducial hole FIH1 formed in the first metal sheet layer MP1. Specifically, the first fiducial hole FIH1 and the second fiducial hole FIH3 may be formed so that an imaginary line penetrating the first fiducial hole FIH1 in a straight line penetrates the second fiducial hole FIH3 in a straight line.

In an embodiment, the display module and the hinge module HIN may be aligned and coupled using the first and second fiducial holes FIH1 and FIH3. In the process of coupling the display module and the hinge module HIN, one or more optical sensors OSE may be used. In the present embodiment, an optical sensor OSE in an IR wavelength band is illustrated and described, but is not limited thereto. The optical sensor OSE may irradiate light in a third direction (e.g., the z-axis direction) perpendicular to the first and second directions, and the optical sensor OSE may identify the first fiducial hole FIH1 and the second fiducial hole FIH3. As described above, the identified positions of the first and second fiducial holes FIH1 and FIH3 may be reference points for aligning the positions of the display module and the hinge module HIN. The display module and the hinge module HIN may be coupled to each other based on the identified positions of the first and second fiducial holes FIH1 and FIH3.

Meanwhile, in an embodiment, an optical filter layer PRL may be included between the protective layer PTL and the window layer FGL of the display module. For example, the optical filter layer (PRL) may be formed by printing a material having a predetermined wavelength band with respect to the lower side of the protective layer PTL, but is not limited thereto. Referring to FIG. 8A, the optical filter layer PRL may be formed over a predetermined area of the lower surface of the protective layer PTL. Further, referring to FIG. 8B, the optical filter layer PRL may not be formed between the protective layer PTL and the window layer FGL.

In an embodiment, the optical filter layer PRL may include a first optical filter portion PTP and a second optical filter portion BMP. The first optical filter portion PTP may be configured to transmit a predetermined wavelength band (e.g., IR wavelength band), and the second optical filter portion BMP may not transmit a predetermined wavelength band (e.g., IR wavelength band). In an example, the first optical filter portion PTP may be configured to transmit at least 90% or more of IR light. In an example, the second optical filter portion BMP may be configured not to transmit light, but may be a black matrix area but not limited thereto.

Referring to the cross section illustrated in FIG. 8A, in an embodiment, the first optical filter portion PTP may be formed to include at least an area corresponding to the first fiducial hole FIH1. The first optical filter portion PTP may be formed over the bending area BA or in a wider range than the bending area BA.

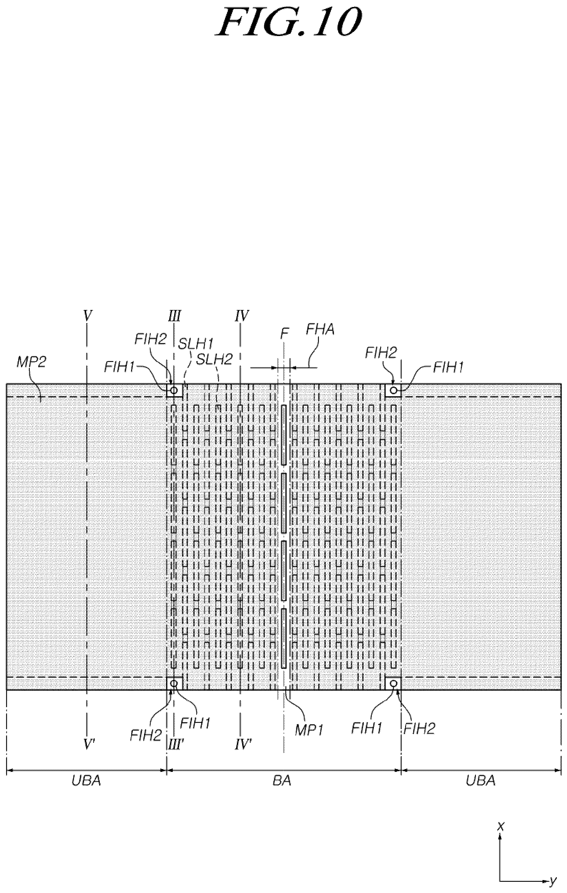

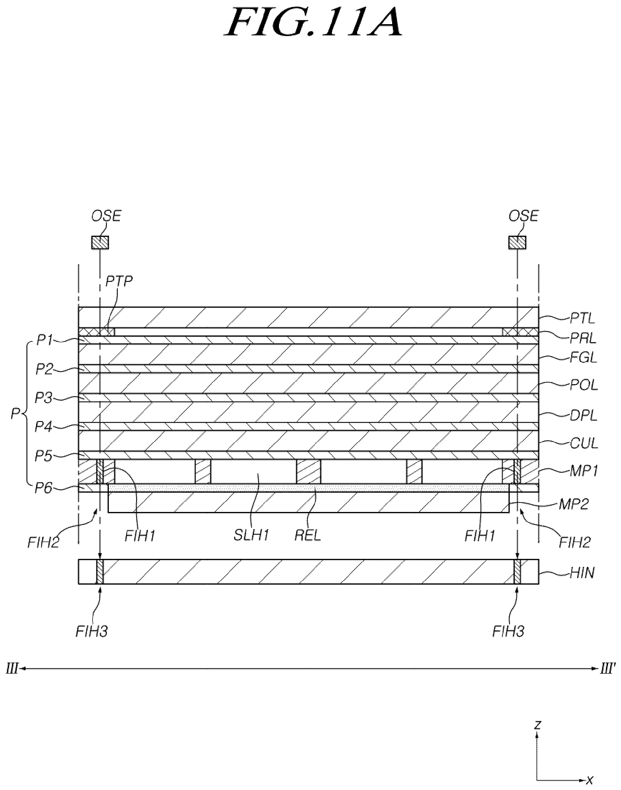

As is described below with reference to FIGS. 10 and 11A, in an embodiment, the first optical filter portion PTP may have substantially the same width as the length of the recess (e.g., the cut-out portion FIH2) provided in the second metal sheet layer MP2 in the first direction, and may be formed to extend in the second direction. In an embodiment, the first optical filter portion PTP may be formed to have a width larger than the length in the first direction of the recess (e.g., the cut-out portion FIH2) provided in the second metal sheet layer MP2. In an embodiment, the first optical filter portion PTP may be formed to have a width smaller than the length of the recess provided in the second metal sheet layer MP2 in the first direction, but the first optical filter portion PTP may be formed to have a width capable of covering in the third direction (e.g., the z-axis) of the first fiducial hole FIH1.

In an embodiment, the first optical filter portion PTP may be formed over the bending area BA along the second direction while maintaining the width. In an embodiment, the first optical filter portion PTP may have the same width as the length of the first metal sheet layer MP1 or the second metal sheet layer MP2 in the first direction, and may be formed to extend in the second direction, but is not limited thereto.

In an embodiment, the first optical filter portion PTP may be formed to have a larger width than the bending area BA. The edge of the first optical filter portion PTP may be positioned further outside than the edge of the first metal sheet layer MP1 corresponding to the bending area BA.

Meanwhile, in an embodiment, a reinforcing layer REL may be disposed on a lower side (e.g., -z-axis side) with respect to the third direction of the first slit holes SLH1 provided in the first metal sheet layer MP1. The reinforcing layer REL may be formed between the adhesive materials P provided on one surface of the second metal sheet layer MP2, but is not limited thereto. In an embodiment, the reinforcing layer REL may be bonded to the first slit holes SLH1 and/or the second slit holes SLH2 to enhance durability in the bending area BA of the display module.

In an embodiment, the reinforcing layer REL may not be formed in a portion corresponding to the first fiducial hole FIH1. In an embodiment, the reinforcing layer REL may be formed on a lower side of the area in which the first and second slit holes SLH1 and SLH2 are provided, and may be deleted from the lower side of the area in which the first fiducial hole FIH1 is provided. Accordingly, the reinforcing layer REL may be formed to have a smaller width than the first metal sheet layer MP1 in the second-direction cross section including the first fiducial hole FIH1.

Further, in one embodiment, the reinforcing layer REL may not be formed in a portion corresponding to the cut-out portion FIH2 of the second metal sheet layer MP2. In an embodiment, the reinforcing layer REL may be formed on a lower side of the area where the first and second slit holes SLH1 and SLH2 are provided, and may be deleted from the lower side of the area where the cut-out portion FIH2 is provided.

Referring to FIG. 8B, in an embodiment, a plurality of slit holes SLH1 and SLH2 may be formed in the first metal sheet layer MP1. The plurality of slit holes SLH1 and SLH2 may be repeatedly formed along the second direction (e.g., the y-axis direction of FIG. 2A). The plurality of slit holes SLH1 and SLH2 may include first slit holes SLH1 and second slit holes SLH2, and the first slit holes SLH1 and the second slit holes SLH2 may be alternately formed with respect to each other along the second direction.

According to an embodiment, the first metal sheet layer MP1 may include first and second slit holes SLH1 and SLH2 in the second-direction cross section that does not include the first fiducial hole FIH1. According to an embodiment, in a cross section, the first metal sheet layer MP1 may be present in a portion corresponding to the bending area BA (the bending area BA of FIG. 7) and the unbending area UBA.

In an embodiment, the slit hole formed in the outermost side with respect to the second direction, i.e., the edge slit hole, may be any one of the first slit hole SLH1 and the second slit hole SLH2. When comparing the cross section including the first fiducial hole FIH1 with the cross section not including the first fiducial hole FIH1 with respect to the second direction, the edge slit hole may be provided at the position where the first fiducial hole FIH1 is formed.

According to an embodiment, the second metal sheet layer MP2 may include a folding hole FOH in the second-direction cross section that does not include the first fiducial hole FIH1. However, according to an embodiment, the cut-out portions FIH2 illustrated in FIG. 8A may not be formed in the second metal sheet layer MP2. The folding hole FOH may be formed over the exposure portion (e.g., the exposure portion FHA of FIG. 7).

According to an embodiment, the second metal sheet layer MP2 may be formed over the bending area BA and the unbending area UBA in the second-direction cross section that does not include the first fiducial hole FIH1. In the cross section, the first metal sheet layer MP1 may also be formed over the bending area BA and the unbending area UBA. In the bending area BA, the first metal sheet layer MP1 may include first and second slit holes SLH1 and SLH2, and in the bending area BA, the second metal sheet layer MP2 may include a folding hole FOH.

According to an embodiment, in the second-direction cross section that does not include the first fiducial hole FIH1, the first metal sheet layer MP1 does not include the first fiducial hole FIH1. Further, the second metal sheet layer MP2 does not include the cut-out portion FIH2 in the cross section. Accordingly, no singularity is identified during sensing using an optical sensor OSE in a portion corresponding to the cross section.

Meanwhile, according to an embodiment, in the second-direction cross section that does not include the first fiducial hole FIH1, the optical filter layer PRL may not include the first optical filter portion PTP. Although not limited thereto, when the first optical filter portion PTP has substantially the same length as the length of the first metal sheet layer MP1 or the second metal sheet layer MP2 in the first direction and extends in the second direction, it may be formed to have substantially the same length as the first optical filter portion PTP illustrated in FIG. 8A as described above with reference to FIG. 8A.

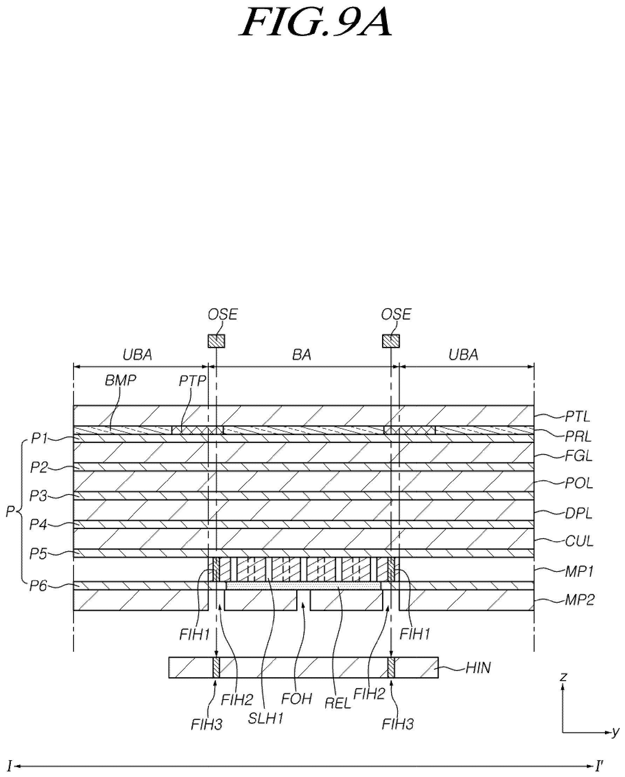

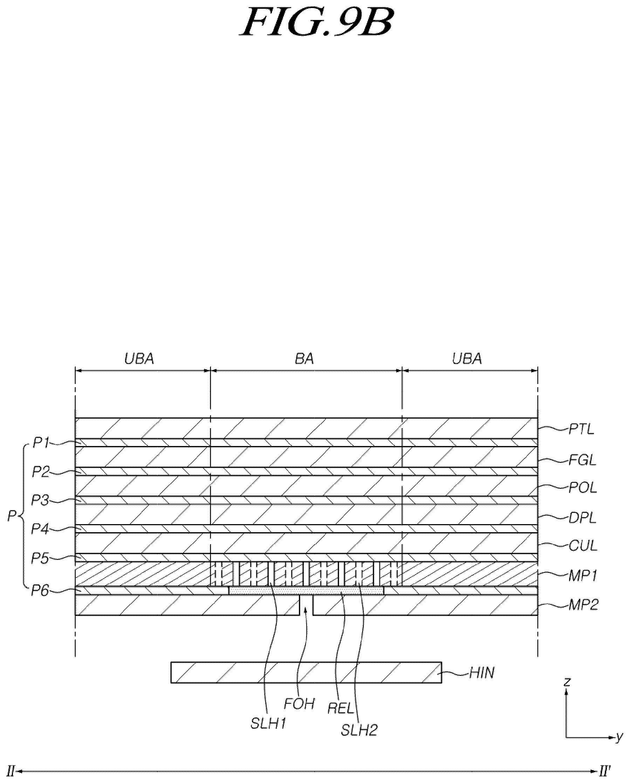

FIG. 9A is a cross-sectional view taken along I-I' of an electronic device according to an embodiment. FIG. 9B is a cross-sectional view taken along II-II' of an electronic device according to an embodiment.

More specifically, FIG. 9A is a cross sectional view of the electronic device taken along line I-I' illustrated in FIG. 7. FIG. 9B is a cross sectional view of the electronic device taken along II-II' illustrated in FIG. 7. Here, the cross section relates to the electronic device but do not illustrate all of the components of the electronic device, but is schematically illustrated to describe the structural relationship of various embodiments of the disclosure.

The protective layer PTL, the window layer FGL, the polarizer POL, the display panel DPL, the cushion layer CUL, the first metal sheet layer MP1, the second metal sheet layer MP2, the reinforcing layer REL, and the adhesive material P illustrated in FIGS. 9A and 9B may be understood to be substantially the same as the protective layer PTL, the window layer FGL, the polarizer POL, the display panel DPL, the cushion layer CUL, the first metal sheet layer MP1, the second metal sheet layer MP2, the reinforcing layer REL, and the adhesive material P described with reference to FIGS. 8A and 8B.

Referring to FIGS. 9A and 9B, in an embodiment, an optical filter layer PRL may be included between the protective layer PTL and the window layer FGL of the display module. For example, the optical filter layer (PRL) may be formed by printing a material having a predetermined wavelength band with respect to the lower side of the protective layer PTL, but is not limited thereto.

In an embodiment, the optical filter layer PRL may include a first optical filter portion PTP and a second optical filter portion BMP. The first optical filter portion PTP may be configured to transmit a predetermined wavelength band (e.g., IR wavelength band), and the second optical filter portion BMP may not transmit a predetermined wavelength band (e.g., IR wavelength band). In an example, the first optical filter portion PTP may be configured to transmit at least 90% or more of IR light. In an example, the second optical filter portion BMP may be configured not to transmit light, but may be a black matrix area but not limited thereto.

Referring to FIG. 9A, in an embodiment, the first optical filter portion PTP may be formed to include at least an area corresponding to the first fiducial hole FIH1 in the second-direction cross section including the first fiducial hole FIH1. The first optical filter portion PTP may be formed over a portion of the bending area BA, but the first optical filter portion PTP may not be formed over a portion corresponding to the folding hole FOH, i.e., an exposure portion (e.g., the exposure portion FHA of FIG. 7). Accordingly, the optical filter layer PRL may include two or more first optical filter portions PTP spaced apart from each other and second optical filter portions BMP disposed with the first optical filter portions PTPs interposed therebetween.

In an embodiment, the first optical filter portion PTP may have the same width as the length of the recess (e.g., the cut-out portion FIH2) provided in the second metal sheet layer MP2 in the first direction, and may be formed to extend in the second direction. In an embodiment, the first optical filter portion PTP may be formed to extend along the second direction while maintaining the width. In an embodiment, the first optical filter portion PTP may have the same width as the length of the first metal sheet layer MP1 or the second metal sheet layer MP2 in the first direction, and may be formed to extend in the second direction, but is not limited thereto.

Meanwhile, in an embodiment, an outer edge of the first optical filter portion PTP may be positioned in the unbending area UBA. Further, the inner edge of the first optical filter portion PTP may be positioned in the bending area BA.

Referring to FIG. 9B, according to an embodiment, in the second-direction cross section that does not include the first fiducial hole FIH1, the optical filter layer PRL may not include the first and second optical filter portions PTP and BMP.

FIG. 10 is a view schematically illustrating a state in which first and second metal sheet layers MP1 and MP2 are stacked according to an embodiment.

The stacked state of the first and second metal sheet layers MP1 and MP2 shown in FIG. 10 is substantially the same as the state shown in FIG. 7. In the following disclosure, a cross-section of the electronic device will be exemplarily described with reference to cross-sectional reference lines (e.g., III-III', IV-IV', and V-V') shown in FIG. 10. The cross-sectional reference lines of FIG. 10 are shown for the first and second metal sheet layers MP1 and MP2, but are not limited thereto, and may be used as a reference line for illustrating a cross-section of each layer of the electronic device at that position. The layer structure of the electronic device may be understood with reference to FIGS. 2A to 4 described above, and the layer structure of the display provided in the electronic device may be understood with reference to FIG. 5.

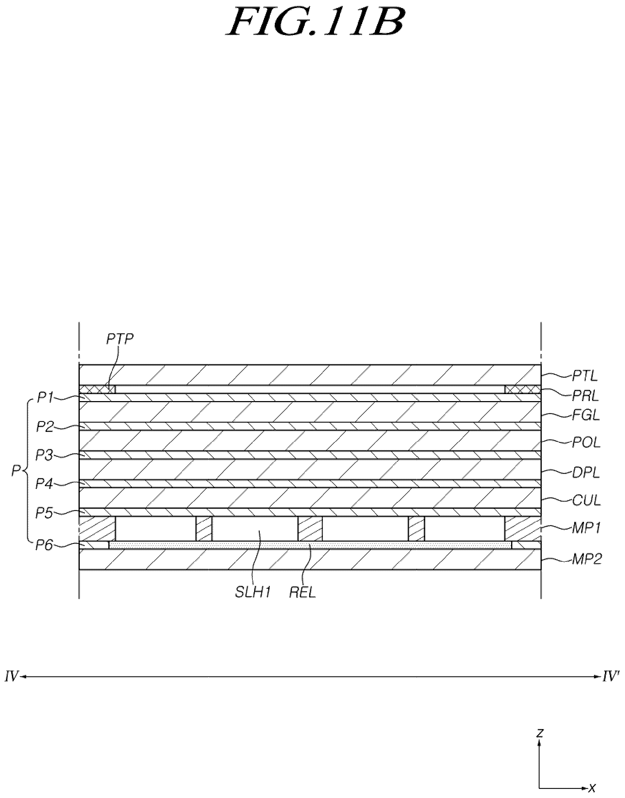

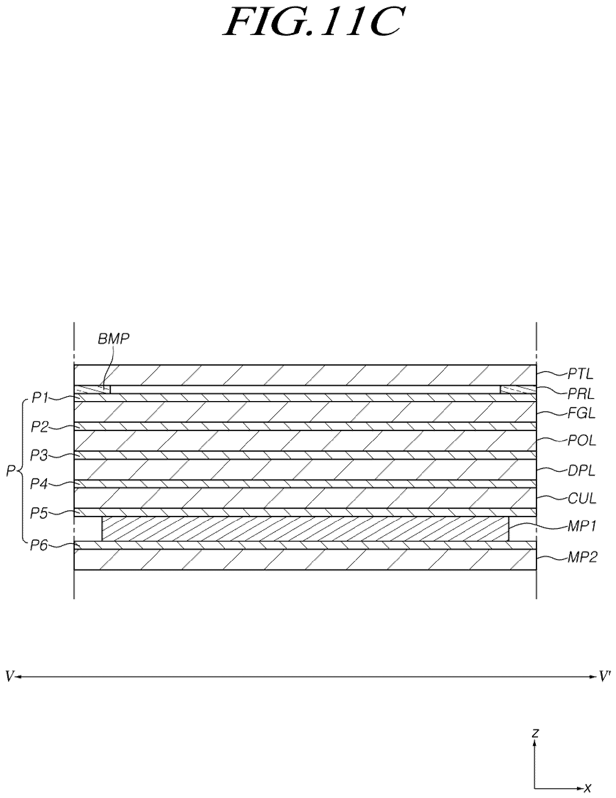

FIG. 11A is a cross-sectional view taken along III-III' of FIG. 10 in an electronic device according to an embodiment. FIG. 11B is a cross-sectional view taken along IV-IV' of an electronic device according to an embodiment. FIG. 11C is a cross-sectional view taken along V-V' of an electronic device according to an embodiment.

In the disclosure, the cross section viewed from III-III' may mean the first-direction fiducial cross section of the electronic device. Further, the cross section viewed from IV-IV' may mean the first-direction inner cross section of the electronic device. Further, the cross section viewed from V-V' may mean the first-direction outer cross section of the electronic device. The first-direction fiducial cross section may mean a cross section in the first direction including the first fiducial hole FIH1, and the first-direction inner/outer cross section may mean a cross section in the second direction not including the first fiducial hole FIH1. The first-direction inner cross section means a cross section closer to the folding axis than the first-direction fiducial cross section, and the first-direction outer cross section means a cross section farther from the folding axis than the first-direction fiducial cross section.

Each cross section does not illustrate all of the components of the electronic device, but is schematically illustrated to describe the structural relationship of various embodiments of the disclosure.

The protective layer PTL, the optical filter layer PRL, the window layer FGL, the polarizer POL, the display panel DPL, the cushion layer CUL, the first metal sheet layer MP1, the second metal sheet layer MP2, the reinforcing layer REL, and the adhesive material P illustrated in FIGS. 11A to 11C may be understood to be substantially the same as the protective layer PTL, the window layer FGL, the polarizer POL, the display panel DPL, the cushion layer CUL, the first metal sheet layer MP1, the second metal sheet layer MP2, the reinforcing layer REL, and the adhesive material P described with reference to FIGS. 8A to 9B.

FIG. 11A illustrates a first-direction fiducial cross section.

In an embodiment, the first fiducial hole FIH1 may be positioned at an edge of the first metal sheet layer MP1 in a cross section along the first direction. In an embodiment, the first fiducial hole FIH1 may be positioned relatively outside as compared with the first slit hole SLH1. In an embodiment, the first fiducial hole FIH1 may be formed to have a diameter shorter than the length of the first slit hole SLH1 in the first direction.

In an embodiment, the second metal sheet layer MP2 may include a cut-out portion FIH2 for exposing the first fiducial hole FIH1. The lower side of the first fiducial hole FIH1 may be open by the cut-out portion FIH2. Since the cut-out portion FIH2 is for exposing the first fiducial hole FIH1, it may be formed in a portion corresponding to the first fiducial hole FIH1.

In an embodiment, the hinge module HIN may include a second fiducial hole FIH3. As described above, the second fiducial hole FIH3 may be formed at a position corresponding to the first fiducial hole FIH1.

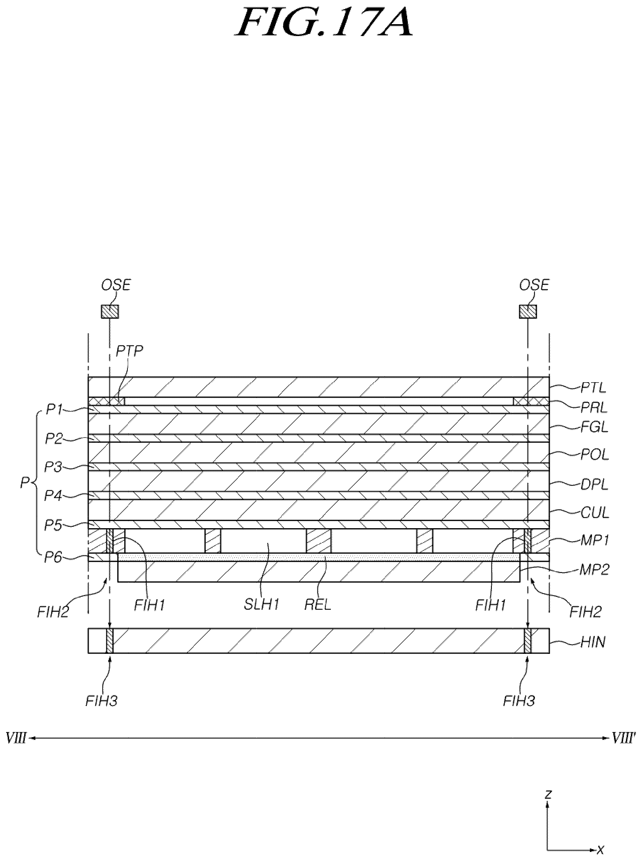

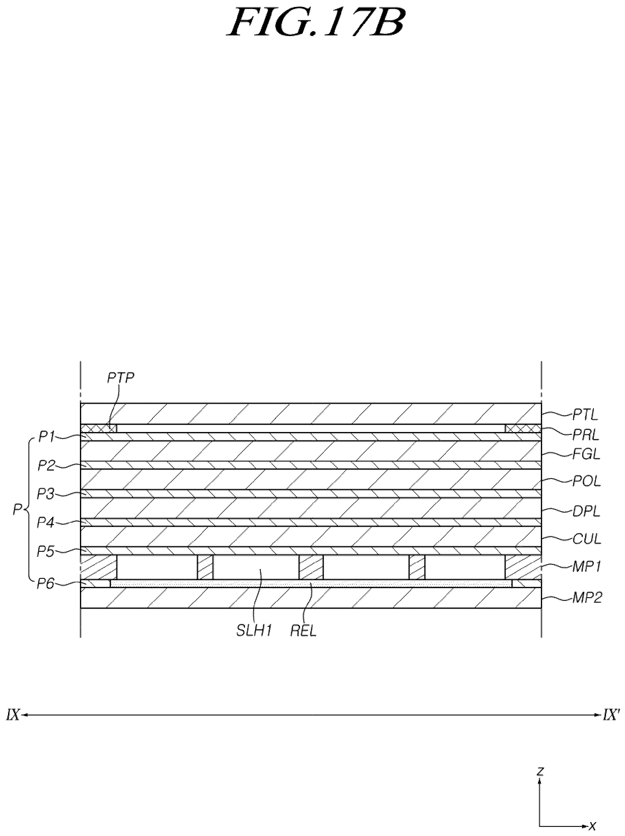

In an embodiment, an optical filter layer PRL may be formed on a lower portion of the protective layer PTL. For example, an optical filter layer PRL may be printed on a lower portion of the protective layer PTL. The optical filter layer PRL may be formed along the edge of the protective layer PTL, which corresponds to the non-display area of the display module DPM. In an embodiment, the optical filter layer PRL may have a property of non-transmitting at least a portion of the visible light band, and as a result, the optical filter layer PRL may not be formed in a portion corresponding to the display area of the display module. Referring to FIG. 11A, an empty space may be formed between the first optical filter portions PTP. Further, the width of the empty space between the first optical filter portions PTP may correspond to the height of the optical filter layer PRL. This may be applied substantially identically to FIGS. 11B, 17A, and 17B described below.

The optical filter layer PRL may include a first optical filter portion PTP.

In an example, the first optical filter portion PTP may be formed in a portion corresponding to the first fiducial hole FIH1. The first optical filter portion PTP may be formed to cover the first fiducial hole FIH1 from the top. In an embodiment, the first optical filter portion PTP may be formed to have a width larger than that of the first fiducial hole FIH1 with respect to the cross section illustrated in FIG. 11A.

In an example, a reinforcing layer REL may be formed between the first metal sheet layer MP1 and the second metal sheet layer MP2. The reinforcing layer REL may be formed to cover at least some or all of the plurality of first slit holes SLH1.

FIG. 11B illustrates a first-direction inner cross section.

FIG. 11B relates to the first-direction inner cross section, and a description common to FIG. 11A is omitted, and the description focuses primarily on differences.

In an inner cross section according to an embodiment, the first metal sheet layer MP1 may not include the first fiducial hole FIH1. In other words, two opposite edges of the first metal sheet layer MP1 may be provided as flat planes. In an example, the first fiducial hole FIH1 may be included only on the first- and second-direction fiducial cross sections, but may not be included in the remaining cross sections.

FIG. 11C illustrates a first-direction outer cross section.

FIG. 11C relates to the first-direction outer cross section, and a description common to FIG. 11A is omitted, and the description focuses primarily on differences.

In an outer cross section according to an embodiment, the first metal sheet layer MP1 may not include the first fiducial hole FIH1. In other words, two opposite edges of the first metal sheet layer MP1 may be provided as flat planes. In an example, the first fiducial hole FIH1 may be included only on the first and second direction fiducial cross sections, but may not be included in the other cross sections.

In an outer cross section according to an embodiment, the optical filter layer PRL may include a second optical filter portion BMP. In an example, the second optical filter portion BMP may be formed at a position covering the step formed in the first metal sheet layer MP1. Unlike the first optical filter portion PTP, the second optical filter portion BMP may be configured not to transmit light in a predetermined wavelength band (e.g., light in an IR wavelength band).

In an outer cross section according to an embodiment, steps may be formed at two opposite edges of the first metal sheet layer MP1. As illustrated in FIG. 10, the steps formed at two opposite edges of the first metal sheet layer MP1 may extend in the second direction (e.g., +y-axis direction or -y-axis direction).

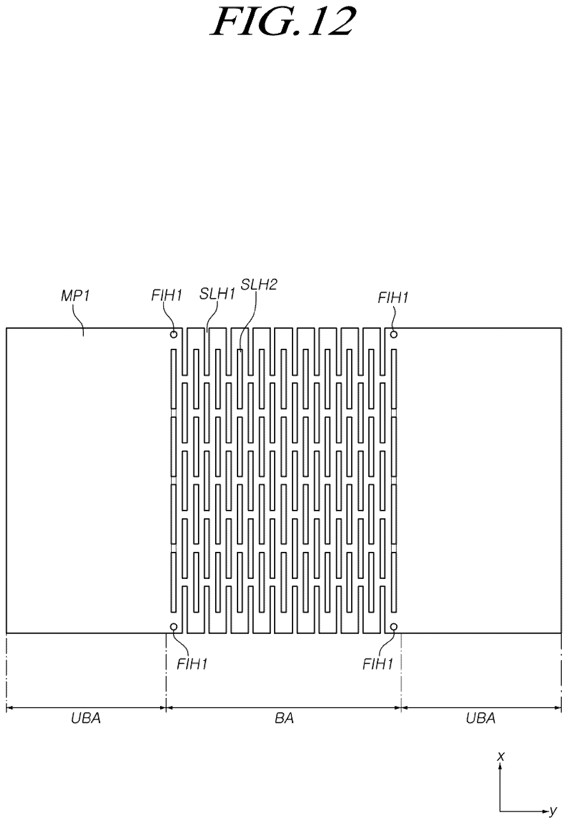

FIG. 12 is a view schematically illustrating a first metal sheet layer according to an embodiment.

In an embodiment, the first metal sheet layer MP1 may be divided into a bending area BA and an unbending area UBA. The first metal sheet layer MP1 may have a bending portion over the bending area BA, and may have an unbending portion (or a flat portion) over the unbending area UBA.

The first metal sheet layer MP1 of the bending area BA may be configured so that the electronic device including the first metal sheet layer MP1 operates in a folded state, an unfolded state, or an intermediate state. In the bending area BA of the first metal sheet layer MP1, a plurality of holes may be provided so that the first metal sheet layer MP1 may be bent.

The first metal sheet layer MP1 of the unbending area UBA may be configured to have a flat surface even when the electronic device including the first metal sheet layer MP1 is maintained in the folded state, the unfolded state, or the intermediate state. The holes may not be formed in the unbending area UBA of the first metal sheet layer MP1 for high rigidity.

In an embodiment, the first metal sheet layer MP1 may include one or more slit holes. One or more slit holes may be formed over the bending area BA. The one or more slit holes may extend in a first direction (e.g., the x-axis direction or the folding axis direction of FIG. 2A).

In an example, the slit holes may include a first slit hole SLH1 and a second slit hole SLH2. The first slit hole SLH1 and the second slit hole SLH2 may be formed at different positions with respect to the second direction. In an example, the first and second slit holes SLH1 and SLH2 may be formed in a manner that they are repeatedly aligned along the first direction. The first and second slit holes SLH1 and SLH2 may be formed in a manner that they are alternately aligned along the second direction.

In an example, the dimension of the second slit hole SLH2 may be determined based on the dimension of the first slit hole SLH1. For example, the dimension of the second slit hole SLH2 may increase or decrease in proportion to the dimension of the first slit hole SLH1. Meanwhile, the dimension of the second slit hole SLH2 may be independently determined regardless of the dimension of the first slit hole SLH1.

In an embodiment, the slit holes SLH1 and SLH2 may be formed in an elliptical shape of a long hole along the first direction, but is not limited thereto. In an embodiment, the slit holes SLH1 and SLH2 may be formed in the same or different shapes.

In an embodiment, the slit holes SLH1 and SLH2 may be disposed regularly or at irregular intervals along the first direction and/or the second direction.

In an embodiment, at least some or all of the one or more slit holes may alternatively be configured as one slit recess. The slit recess may be formed like a trench formed by a predetermined depth in a vertical direction (e.g., the +z-axis direction or the -z-axis direction in FIG. 2A) of the first metal sheet layer MP1.

In an embodiment, at least some of the slit holes SLH1 and SLH2 may be formed between the first peripheral holes FIH1 described below. More specifically, a plurality of slit holes SLH2 may be formed between at least some, or at least two, of the first peripheral holes FIH1. FIG. 6 illustrates an example where the slit hole SLH2 is formed between the first fiducial holes FIH1, but is not limited thereto. Here, a plurality of slit holes SLH1 and SLH2 positioned between the first fiducial holes FIH1 may be formed to extend in the folding axis direction. Further, the first fiducial holes FIH1 positioned outside the slit holes SLH1 and SLH2 may be positioned on the same extension line as the slit holes SLH1 and SLH2.

In an embodiment, the first metal sheet layer MP1 may include one or more first fiducial holes FIH1. The first fiducial hole FIH1 may be formed in an edge of the bending area BA. The first fiducial hole FIH1 may be formed at four corner positions of the first metal sheet layer MP1 corresponding to the bending area BA.

In an example, the first fiducial hole FIH1 may be formed in a circular shape, but is not limited thereto.

In an example, the first fiducial hole(s) FIH1 may be positioned on the extension line of slit holes (e.g., the second slit hole SLH2) formed in an edge with respect to the second direction of the bending area BA.

In an example, the first fiducial hole FIH1 may be formed in each edge of the first metal sheet layer MP1 with respect to the extension line of the edge slit holes. For example, an upper first fiducial hole FIH1 and a lower fiducial hole FIH1 may be formed in the first metal sheet layer MP1 with respect to the extension line of the edge slit holes. Since the edge slit holes may be present at each corner of the bending area BA, four first fiducial holes FIH1 may be formed on the bending area BA.

In an embodiment, the first fiducial hole FIH1 may be formed to cover a front direction (e.g., the z-axis direction of FIG. 2A) of the electronic device by the protective layer (e.g., the protective layer PTL of FIG. 5). For example, the first fiducial hole FIH1 may be formed so as not to protrude in an outer direction (e.g., the first direction or the x-axis direction) of the display module DPM. In other words, the width between the first partial holes FIH1 with respect to the first direction (e.g., the x-axis direction) may be formed to be smaller than the width of the bending area with respect to the first direction. As is described below, accordingly, when the display module DPM is viewed from the front, the first fiducial hole FIH1 may be covered by an upper stacked component such as the protective layer PTL and the optical filter layer PRL, and may be hardly identified with the naked eye.

In an embodiment, the first metal sheet layer MP1 may have substantially the same width in the bending area BA and the unbending area UBA. Here, the width means the width with respect to the first direction. In other words, unlike the first metal sheet layer MP1 illustrated in FIGS. 6 and 7, it may not include a step between the bending area BA and the unbending area UBA.

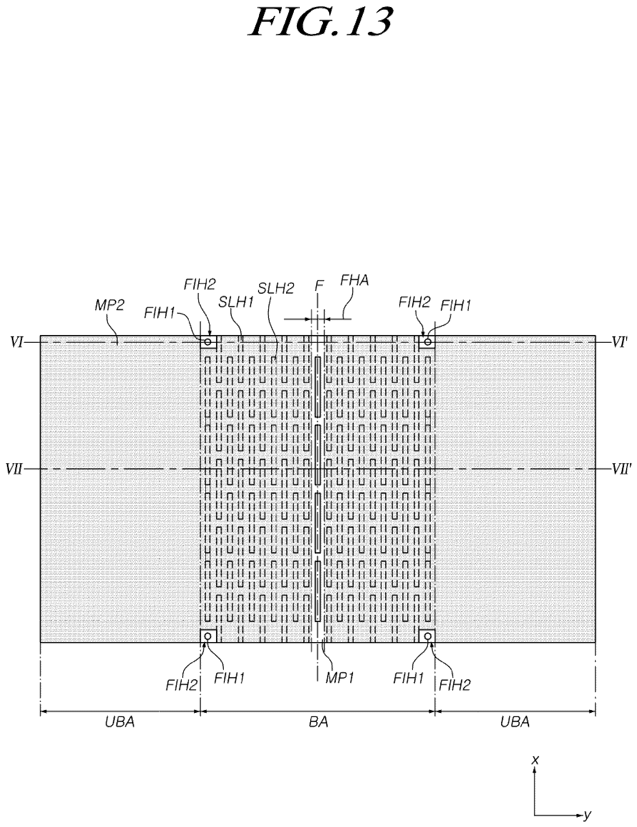

FIG. 13 is a view schematically illustrating a state in which first and second metal sheet layers MP1 and MP2 are stacked according to an embodiment.

In an embodiment, the first metal sheet layer MP1 may be stacked on the second metal sheet layer MP2, as described above with reference to FIG. 12.

In an embodiment, the first metal sheet layer MP1 may be formed to have an area of at least a portion of the second metal sheet layer MP2. In an embodiment, the width of the first metal sheet layer MP1 with respect to the first direction (e.g., the x-axis direction of FIG. 2A) may be formed to be substantially the same as the width of the second metal sheet layer MP2 with respect to the first direction in the unbending area UBA. In an embodiment, the width of the first metal sheet layer MP1 with respect to the first direction may be formed to be substantially the same as the width of the second metal sheet layer MP2 with respect to the first direction in the bending area BA.

In an embodiment, the second metal sheet layer MP2 may include an exposure portion FHA in a central portion. The exposure portion FHA may be formed to extend along the first direction. In an example, the exposure portion FHA may be formed from one edge to the other edge of the second metal sheet layer MP2 along the first direction, but is not limited thereto. For example, the exposure portion FHA is formed along the first direction, and a portion and the other portion of the second metal sheet layer MP2 with the center therebetween may be partially connected to each other.

In an embodiment, the first metal sheet layer MP1 may be partially exposed by the exposure portion FHA provided in the second metal sheet layer MP2. Specifically, at least a portion of the first metal sheet layer MP1 corresponding to the exposure portion FHA of the second metal sheet layer MP2 may be exposed.

In an embodiment, the width of the exposure portion FHA with respect to the second direction may be formed with respect to the width of the slit holes SLH1 and SLH2 formed in the first metal sheet layer MP1. For example, the width of the exposure portion FHA may be formed to be larger than the width of the single slit hole with respect to the second direction (e.g., the y-axis direction of FIG. 2A). Further, with respect to the second direction, the width of the exposure portion FHA may be formed in a dimension to which at least one, at least two, or at least three slit holes SLH1 and SLH2 are exposed, but is not limited thereto.

In an embodiment, the second metal sheet layer MP2 may have a recess (e.g., the cut-out portion FIH2) in a portion corresponding to the first fiducial hole FIH1. The second metal sheet layer MP2 may be formed by the cut-out portion FIH2 so as not to cover at least a portion of the first metal sheet layer MP1 corresponding to the first subject hole FIH1. The width of the second metal sheet layer MP2 may be reduced in an area adjacent to the first fiducial hole FIH1 with respect to the first direction, and the reduced width may be substantially the same as the width of the first metal sheet layer MP1 in the unbending area UBA.

Meanwhile, the first and second metal sheet layers MP1 and MP2 may be provided as a component of the display shown in FIG. 5. In the following disclosure, a cross-section of the electronic device will be exemplarily described with reference to cross-sectional reference lines (e.g., VI-VI' and VII-VII') shown in FIG. 13. The cross-sectional reference lines of FIG. 13 are shown for the first and second metal sheet layers MP1 and MP2, but are not limited thereto, and may be used as a reference line for illustrating a cross-section of each layer of the electronic device at that position. The layer structure of the electronic device may be understood with reference to FIGS. 2A to 4 described above, and the layer structure of the display provided in the electronic device may be understood with reference to FIG. 5.

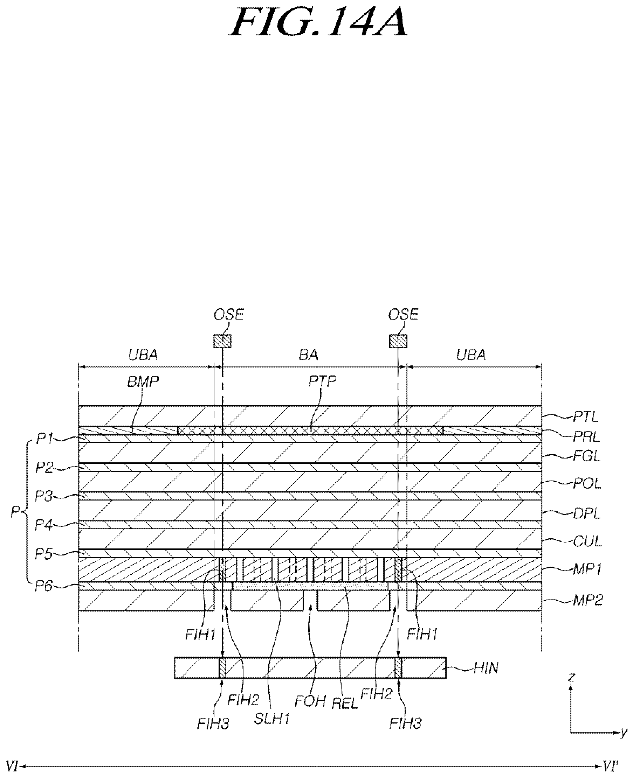

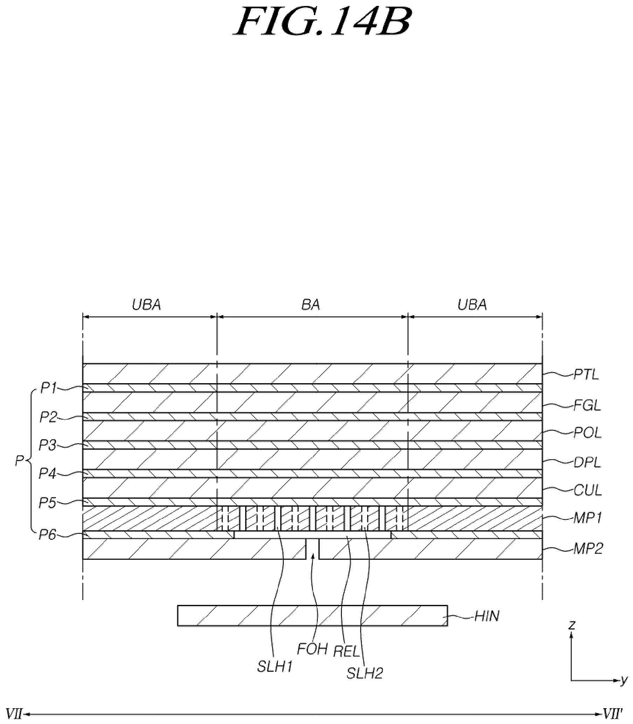

FIG. 14A is a cross-sectional view taken along VI-VI' of FIG. 13 in an electronic device according to an embodiment. FIG. 14B is a cross-sectional view taken along VII-VII' of an electronic device according to an embodiment.

More specifically, FIG. 14A is a cross sectional view of the electronic device taken along VI-VI' illustrated in FIG. 13. FIG. 14B is a cross sectional view of the electronic device taken along VII-VII' illustrated in FIG. 7. Here, the cross section relates to the electronic device but do not illustrate all of the components of the electronic device, but is schematically illustrated to describe the structural relationship of various embodiments of the disclosure.

For example, FIG. 14A and FIG. 14B illustrate not only the first and second metal sheet layers MP1 and MP2, but also the protective layer PTL, the window layer FGL, the polarizer POL, the display panel DPL, and the cushion layer CUL, and exemplarily illustrate an optical sensor(s) OSE and a hinge module HIN (e.g., the hinge module 240 of FIG. 4) to illustrate alignment using the first fiducial hole FIH1.

In an embodiment, the electronic device may include a display module (e.g., the display module 160 of FIG. 1, the display DPM of FIG. 4 and FIG. 5). The display module may be disposed to extend from the first surface (e.g., the first surface 211 of FIG. 2A) of the first housing (e.g., the first surface 211 of FIG. 2A) across the hinge module HIN (e.g., the hinge module 240 of FIG. 4) to at least a portion of the third surface (e.g., the third surface 221 of FIG. 2A) of the second housing (e.g., the second housing 220 of FIG. 2A).

In an embodiment, the electronic device may include a hinge housing (e.g., the hinge housing 241 of FIG. 4) that supports the hinge module HIN, is exposed to the outside when the electronic device is in the folded state, and is disposed to be invisible from the outside in the unfolded state.

The following description focuses primarily on differences with the description of the electronic device made with reference to FIGS. 14A and 14B, common to the description made above with reference to FIGS. 8A and 8B, replaced by the above description.

Referring to FIG. 14A, in an embodiment, the first metal sheet layer MP1 may be formed over the bending area BA and the unbending area UBA. In particular, as the first metal sheet layer MP1 is formed over the unbending area UBA, the first metal sheet layer MP1 may be bonded to face the second metal sheet layer MP2 as a whole in the unbending area UBA. In an embodiment, the first metal sheet layer MP1 may be bonded to the second metal sheet layer MP2 on a surface over the unbending area UBA. In an embodiment, the first metal sheet layer MP1 may have the same width as the second metal sheet layer MP2 over the unbending area UBA. Here, the width is with respect to the first direction (e.g., the x-axis direction).

Meanwhile, the cross section of the electronic device illustrated in FIG. 14B may be formed substantially identically to the cross section of the electronic device illustrated in FIG. 8B.

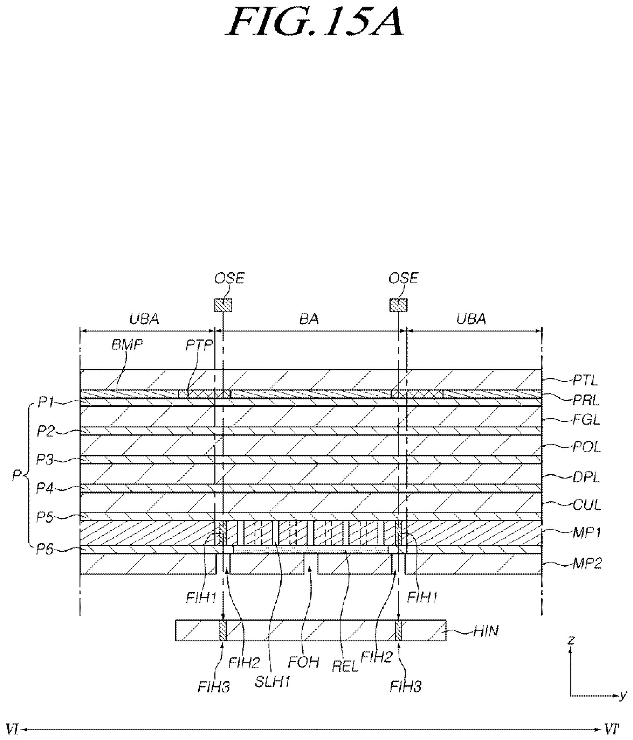

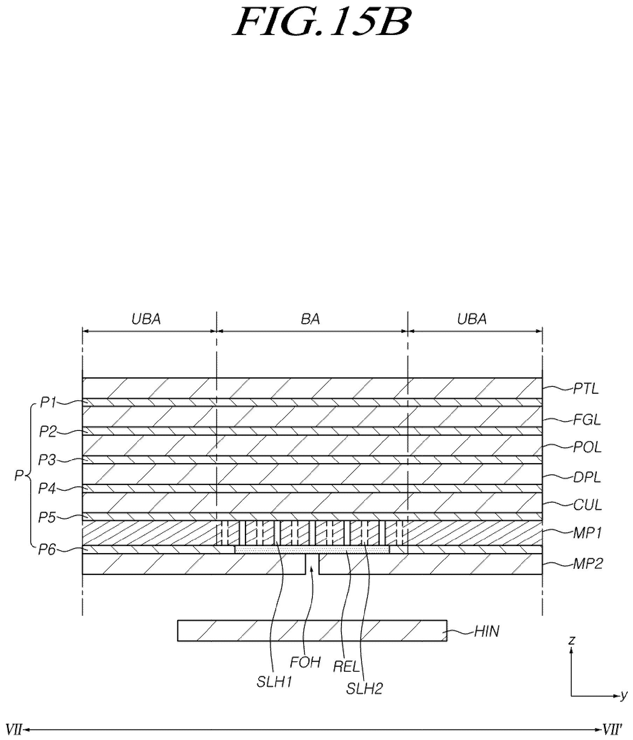

FIG. 15A is a cross-sectional view taken along VI-VI' of FIG. 13 in an electronic device according to an embodiment. FIG. 15B is a cross-sectional view taken along VII-VII' of an electronic device according to an embodiment.

More specifically, FIG. 15A is a cross sectional view of the electronic device taken along VI-VI' illustrated in FIG. 13. FIG. 15B is a cross sectional view of the electronic device taken along VII-VII' illustrated in FIG. 13. Here, the cross section relates to the electronic device but do not illustrate all of the components of the electronic device, but is schematically illustrated to describe the structural relationship of various embodiments of the disclosure.

The protective layer PTL, the window layer FGL, the polarizer POL, the display panel DPL, the cushion layer CUL, the first metal sheet layer MP1, the second metal sheet layer MP2, the reinforcing layer REL, and the adhesive material P illustrated in FIGS. 15A and 15B may be understood to be substantially the same as the protective layer PTL, the window layer FGL, the polarizer POL, the display panel DPL, the cushion layer CUL, the first metal sheet layer MP1, the second metal sheet layer MP2, the reinforcing layer REL, and the adhesive material P described with reference to FIGS. 8A and 8B.

The following description focuses primarily on differences with the description of the electronic device made with reference to FIGS. 15A and 15B, common to the description made above with reference to FIGS. 9A and 9B, replaced by the above description.

Referring to FIG. 15A, in an embodiment, the first metal sheet layer MP1 may be formed over the bending area BA and the unbending area UBA. In particular, as the first metal sheet layer MP1 is formed over the unbending area UBA, the first metal sheet layer MP1 may be bonded to face the second metal sheet layer MP2 as a whole in the unbending area UBA. In an embodiment, the first metal sheet layer MP1 may be bonded to the second metal sheet layer MP2 on a surface over the unbending area UBA. In an embodiment, the first metal sheet layer MP1 may have the same width as the second metal sheet layer MP2 over the unbending area UBA. Here, the width is with respect to the first direction (e.g., the x-axis direction).

Meanwhile, the cross section of the electronic device illustrated in FIG. 15B may be formed substantially identically to the cross section of the electronic device illustrated in FIG. 9B.

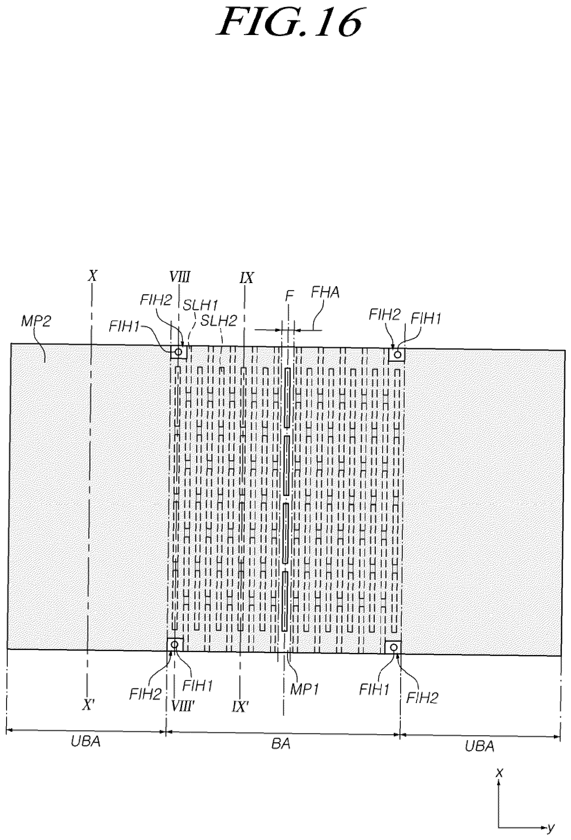

FIG. 16 is a view schematically illustrating a state in which first and second metal sheet layers MP1 and MP2 are stacked according to an embodiment.

The stacked state of the first and second metal sheet layers MP1 and MP2 shown in FIG. 16 is substantially the same as the state shown in FIG. 13. In the following disclosure, a cross-section of the electronic device will be exemplarily described with reference to cross-sectional reference lines (e.g., VIII-VIII', IX-IX', and X-X') shown in FIG. 16. The cross-sectional reference lines of FIG. 16 are shown for the first and second metal sheet layers MP1 and MP2, but are not limited thereto, and may be used as a reference line for illustrating a cross-section of each layer of the electronic device at that position. The layer structure of the electronic device may be understood with reference to FIGS. 2A to 4 described above, and the layer structure of the display provided in the electronic device may be understood with reference to FIG. 5.

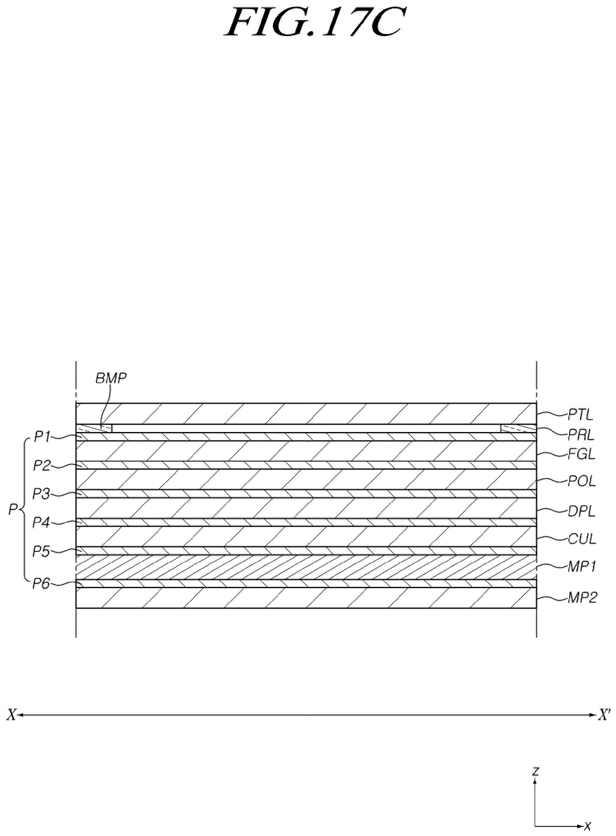

FIG. 17A is a cross-sectional view taken along VIII-VIII' of FIG. 16 in an electronic device according to an embodiment. FIG. 17B is a cross-sectional view taken along IX-IX' of an electronic device according to an embodiment. FIG. 17C is a cross-sectional view taken along X-X' of an electronic device according to an embodiment.

In the disclosure, the cross section viewed from VIII-VIII' may mean the first-direction fiducial cross section of the electronic device. Further, the cross section viewed from IX-IX' may mean the first-direction inner cross section of the electronic device. Further, the cross section viewed from X-X' may mean the first-direction outer cross section of the electronic device. The first-direction fiducial cross section may mean a cross section in the first direction including the first fiducial hole FIH1, and the first-direction inner/outer cross section may mean a cross section in the second direction not including the first fiducial hole FIH1. The first-direction inner cross section means a cross section close to the folding axis than the first-direction fiducial cross section, and the first-direction outer cross section means a cross section farther from the folding axis than the first-direction fiducial cross section.

Each cross section does not illustrate all of the components of the electronic device, but is schematically illustrated to describe the structural relationship of various embodiments of the disclosure.

The protective layer PTL, the optical filter layer PRL, the window layer FGL, the polarizer POL, the display panel DPL, the cushion layer CUL, the first metal sheet layer MP1, the second metal sheet layer MP2, the reinforcing layer REL, and the adhesive material P illustrated in FIGS. 17A to 17C may be understood to be substantially the same as the protective layer PTL, the window layer FGL, the polarizer POL, the display panel DPL, the cushion layer CUL, the first metal sheet layer MP1, the second metal sheet layer MP2, the reinforcing layer REL, and the adhesive material P described with reference to FIGS. 14A to 15B.

In an embodiment, the first-direction fiducial cross section illustrated in FIG. 17A may be substantially the same as the first-direction fiducial cross section illustrated in FIG. 11A. Further, the first-direction inner cross section illustrated in FIG. 17B may be substantially the same as the first-direction inner cross section illustrated in FIG. 11B.

In an embodiment, the first-direction outer cross section shown in FIG. 17C has a part in common with the first-direction outer cross section shown in FIG. 11C but has some differences, which are described below.

Referring to FIG. 17C, in the outer cross section according to an embodiment, the first metal sheet layer MP1 may be formed to have substantially the same length as the second metal sheet layer MP2. Specifically, since the first metal sheet layer MP1 does not include a step, the first metal sheet layer MP1 may be formed to have substantially the same length as the second metal sheet layer MP2. Accordingly, the first metal sheet layer MP1 and the second metal sheet layer MP2 may be overall bonded to each other.

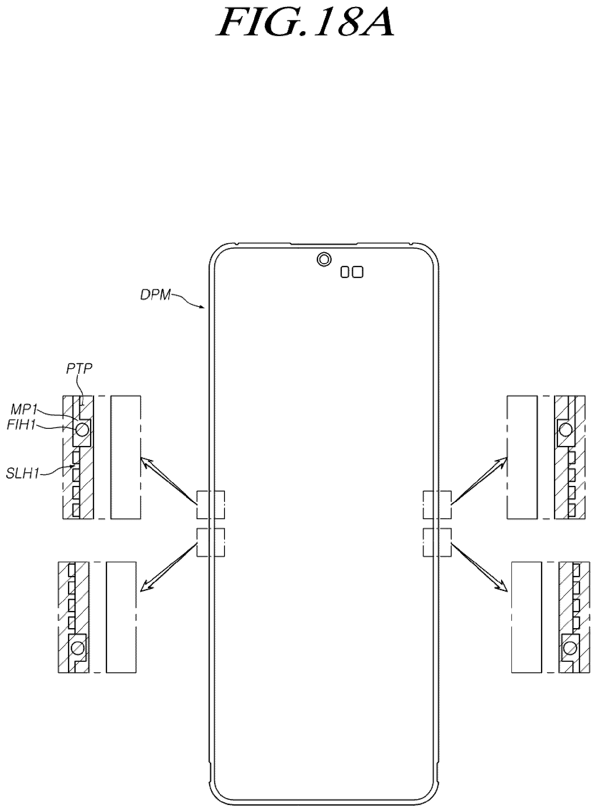

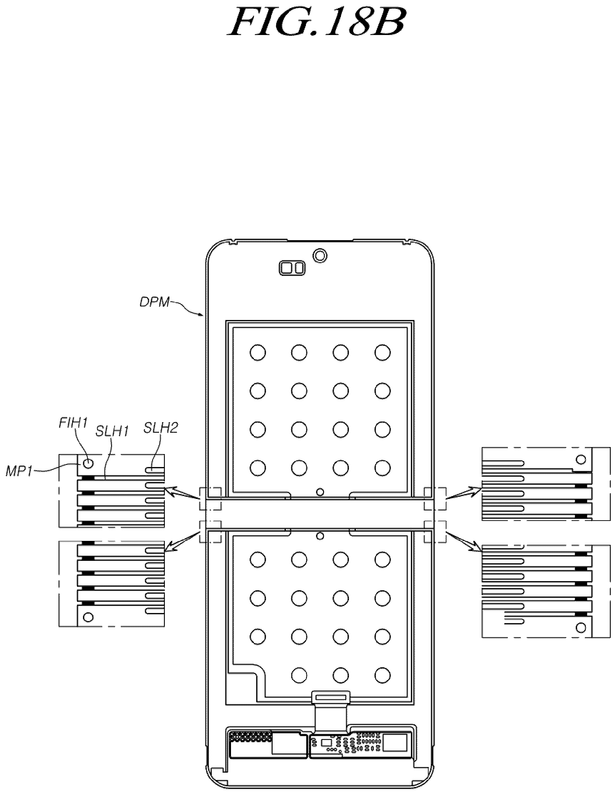

FIG. 18A is a front view illustrating a display module provided in an electronic device according to an embodiment. FIG. 18B is a rear view illustrating a display module provided in an electronic device according to an embodiment. Additionally, the rear surface of the display module shown in FIG. 18B illustrates a state in which the second metal sheet layer is not provided, as an example, but the display module according to an embodiment of the disclosure is not limited to the illustrated form.

As described above, the first metal sheet layer MP1 may include a plurality of slit holes SLH1 and SLH2 formed in a direction parallel to the folding axis. The plurality of slit holes may include, e.g., first slit holes SLH1 and second slit holes SLH2. At least some of the first slit holes SLH1 may extend to a side edge of the first metal sheet layer MP1, but are not limited thereto.

The first optical filter portion PTP may be formed to cover at least a portion of the first metal sheet layer MP1 and the second metal sheet layer (not shown). The first optical filter portion PTP may be formed on an upper portion of the first metal sheet layer MP1 and the second metal sheet layer MP2 so that the first metal sheet layer MP1 and/or the second metal sheet layer MP2 is not exposed or does not protrude to the outside of the display module.

The first optical filter portion PTP may be formed on an upper portion of the first metal sheet layer MP1 and the second metal sheet layer MP2, and may be formed of a material capable of transmitting light in a predetermined wavelength band so that the first metal sheet layer MP1 and/or the second metal sheet layer MP2 may be identified by the light in the predetermined wavelength band. In an example, the first optical filter portion PTP may be configured to transmit light in an IR wavelength band. When light in the IR wavelength band is irradiated to the first optical filter portion PTP, the first metal sheet layer MP1 positioned under the first optical filter portion PTP and the first fiducial hole FIH1 formed in the first metal sheet layer MP1 may be detected.

Although not limited thereto, in an embodiment, the remaining components except for the first optical filter portion PTP may be removed from the upper portion of the first fiducial hole FIH1.

The electronic device according to various embodiments may be one of various types of electronic devices. The electronic devices may include, for example, a display device, a portable communication device (e.g., a smartphone), a computer device, a portable multimedia device, a portable medical device, a camera, a wearable device, or a home appliance. The electronic devices according to an embodiment are not limited to those described above.

It should be appreciated that various embodiments of the disclosure and the terms used therein are not intended to limit the technological features set forth herein to particular embodiments and include various changes, equivalents, or replacements for a corresponding embodiment. As used herein, the singular forms "a," "an," and "the" are intended to include the plural forms as well, unless the context clearly indicates otherwise. As used herein, the term 'and/or' should be understood as encompassing any and all possible combinations by one or more of the enumerated items. As used herein, the terms "include," "have," and "comprise" are used merely to designate the presence of the feature, component, part, or a combination thereof described herein, but use of the term does not exclude the likelihood of presence or adding one or more other features, components, parts, or combinations thereof. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order).

As used herein, the term "part" or "module" may include a unit implemented in hardware, software, or firmware, and may interchangeably be used with other terms, for example, "logic," "logic block," "part," or "circuitry". A part or module may be a single integral component, or a minimum unit or part thereof, adapted to perform one or more functions. For example, according to an embodiment, 'part' or 'module' may be implemented in a form of an application-specific integrated circuit (ASIC).

As used in various embodiments of the disclosure, the term "if" may be interpreted as "when," "upon," "in response to determining," or "in response to detecting," depending on the context. Similarly, "if A is determined" or "if A is detected" may be interpreted as "upon determining A" or "in response to determining A", or "upon detecting A" or "in response to detecting A", depending on the context.

The program executed by the electronic device described herein may be implemented as a hardware component, a software component, and/or a combination thereof. The program may be executed by any system capable of executing computer readable instructions.

The software may include computer programs, codes, instructions, or combinations of one or more thereof and may configure the processing device as it is operated as desired or may instruct the processing device independently or collectively. The software may be implemented as a computer program including instructions stored in computer-readable storage media. The computer-readable storage media may include, e.g., magnetic storage media (e.g., read-only memory (ROM), random-access memory (RAM), floppy disk, hard disk, etc.) and an optically readable media (e.g., CD-ROM or digital versatile disc (DVD). Further, the computer-readable storage media may be distributed to computer systems connected via a network, and computer-readable codes may be stored and executed in a distributed manner. The computer program may be distributed (e.g., downloaded or uploaded) via an application store (e.g., Play Store^{™}), directly between two UEs (e.g., smartphones), or online. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device, comprising:
a hinge module;
a first housing and a second housing disposed on two opposite sides of a folding axis; and
a display module including a first metal sheet layer having a plurality of first fiducial holes and a plurality of slit holes, the display module disposed on the first housing and the second housing through the hinge module;
wherein the hinge module is coupled to the first housing and the second housing and includes a plurality of second fiducial holes,
wherein the display module and the hinge module are aligned with respect to the plurality of first fiducial holes and the plurality of second fiducial holes, and
wherein a width between the plurality of first fiducial holes is smaller than a width of the first metal sheet layer with respect to a folding axis direction.

2. The electronic device of claim 1, wherein the plurality of first fiducial holes and the plurality of slit holes are formed in a bending area of the display module.

3. The electronic device of claim 2, wherein the plurality of first fiducial holes are formed in four corners, respectively, of the first metal sheet layer corresponding to the bending area.

4. The electronic device of any one of claims 1 to 3, wherein the display module includes a second metal sheet layer bonded to the first metal sheet layer, and
wherein the second metal sheet layer has an opening in a portion corresponding to each of the plurality of first fiducial holes, and wherein the opening is formed to have a width larger than a diameter of a corresponding first fiducial hole.

5. The electronic device of claim 4, wherein the second metal sheet layer includes an exposure portion formed along the folding axis, and
wherein the exposure portion is formed to expose at least some of the plurality of slit holes formed in the first metal sheet layer.

6. The electronic device of any one of claims 1 to 5, wherein the display module includes a protective layer on an uppermost side and an optical filter layer printed on a lower surface of the protective layer,
wherein the optical filter layer includes a first optical filter portion transmitting light of a predetermined wavelength band and a second optical filter portion absorbing or reflecting the light of the predetermined wavelength band, and
wherein the predetermined wavelength band includes an infrared (IR) wavelength band.

7. The electronic device of claim 6, wherein the first optical filter portion is formed on an upper portion of the plurality of first fiducial holes so that light radiated vertically from an upper side of the display module is transmitted vertically to the display module.

8. The electronic device of claim 6 or 7, wherein the first optical filter portion is formed to extend from a portion corresponding to a third fiducial hole formed on one side of the folding axis, among the plurality of first fiducial holes to a fourth fiducial hole formed symmetrically on another side across a bending area of the display module among the plurality of first fiducial holes.

9. The electronic device of any one of claims 6 to 8, wherein the first optical filter portion is formed to be spaced apart from a portion corresponding to a third fiducial hole formed on one side of the folding axis, among the plurality of first fiducial holes, and a portion corresponding to a fourth fiducial hole formed symmetrically on another side, among the plurality of first fiducial holes.

10. The electronic device of any one of claims 6 to 9, wherein the first optical filter portion is formed to have a larger width than a bending area of the display module with respect to a direction perpendicular to the folding axis.

11. The electronic device of any one of claims 1 to 10, wherein the plurality of slit holes include an edge slit hole formed on an outermost side of a bending area of the display module with respect to a direction perpendicular to the folding axis,
wherein the edge slit hole extends in a direction of the folding axis, and
wherein at least some of the plurality of first fiducial holes are formed on the same line as an extension line of the edge slit hole.

12. The electronic device of any one of claims 1 to 11, wherein the plurality of first fiducial holes are formed to be hidden inside the display module without protruding outside of the display module.

13. The electronic device of any one of claims 1 to 12, wherein a step is formed between a bending area and an unbending area of the first metal sheet layer,
wherein the step is formed to have a larger width than a diameter of at least one of the plurality of first fiducial holes, and
wherein a width of the first metal sheet layer is formed to be smaller in the bending area than in the unbending area by the step with respect to a direction perpendicular to the folding axis.

14. An electronic device, comprising:
a display module disposed on a plurality of housings; and
a hinge module operatively coupled to the plurality of housings,
wherein the display module includes a metal sheet layer having a plurality of first fiducial holes and a plurality of slit holes, wherein the plurality of first fiducial holes are formed to be covered by a protective layer included in the display module,
wherein the hinge module includes a plurality of second fiducial holes, and
wherein the display module and the hinge module are aligned with respect to the plurality of first fiducial holes and the plurality of second fiducial holes.

15. An electronic device, comprising:
first and second housings;
a display module disposed on the first and second housings; and
a hinge module operatively coupled to the first and second housings,
wherein the display module includes a metal sheet layer having a plurality of first fiducial holes, wherein the plurality of first fiducial holes are formed not to protrude outside of a protective layer included in the display module,
wherein the hinge module includes a plurality of second fiducial holes, and
wherein the display module and the hinge module are aligned with respect to the plurality of first fiducial holes and the plurality of second fiducial holes.
